# EUROPEAN PATENT APPLICATION

(11) **EP 4 757 278 A1**
(43) Date of publication of application: **10.06.2026**
(21) Application number: 24862046.0
(22) Date of filing: 05.09.2024
(51) Int. Cl.: H04L 61/103

(54) **SIGNAL PROCESSING METHOD, APPARATUS, AND SYSTEM**

(30) Priority: 06.09.2023 CN 202311162937
(71) Applicant: HUAWEI TECHNOLOGIES CO., LTD., Shenzhen 518129 (CN)
(72) Inventor: PAN, Dongcheng, Shenzhen, Guangdong 518129 (CN); ZHANG, Tingting, Shenzhen, Guangdong 518129 (CN); ZHANG, Sen, Shenzhen, Guangdong 518129 (CN); ZHUANG, Yan, Shenzhen, Guangdong 518129 (CN); WANG, Renlei, Shenzhen, Guangdong 518129 (CN)
(74) Representative: MERH-IP Matias Erny Reichl Hoffmann Patentanwälte PartG mbB
(86) International application number: PCT/CN2024/117265
(87) International publication number: WO 2025/051208

(57) **Abstract**

This application discloses a signal processing method, apparatus, and system, and relates to the field of communication technologies. In the method, a to-be-transmitted signal is encoded to obtain multiple code blocks. The multiple code blocks include a first data signal and/or a first control signal, and include a management signal. Therefore, the multiple code blocks include diverse types of signals. Furthermore, in the method, transmission of multiple code blocks is performed through one serial channel, so that a quantity of pins of the serial channel may be small. In addition, in the method, a serial channel implemented based on an MII may be used. Therefore, the method may be applied to an MII scenario.

## Description

This application claims priority to Chinese Patent Application No. 202311162937.4, filed on September 6, 2023 and entitled "SIGNAL PROCESSING METHOD, APPARATUS, AND SYSTEM", which is incorporated herein by reference in its entirety.

### TECHNICAL FIELD

This application relates to the field of communication technologies, and in particular, to a signal processing method, an apparatus, and a system.

### BACKGROUND

In the field of communication technologies, a signal transmitting end may process a signal, and transmit an obtained processing result to a signal receiving end, and the signal receiving end restores the signal based on the received processing result.

### SUMMARY

This application provides a signal processing method, an apparatus, and a system, to process a signal.

According to a first aspect, a signal processing method is provided. The method includes: encoding a to-be-transmitted signal to obtain multiple code blocks, where the multiple code blocks include a first data signal and/or a first control signal, and the multiple code blocks further include a management signal; and sending the multiple code blocks through one serial channel. The serial channel may be referred to as a first serial channel. In the method, the multiple code blocks include the management signal and the first data signal and/or the first control signal. Therefore, the multiple code blocks can include content of a large quantity of types of signals. When transmission of the multiple code blocks is performed through one serial channel, only a small quantity of pins need to be disposed to implement the serial channel, and then transmission of the first data signal, the first control signal, and the management signal is implemented through the serial channel.

In a possible implementation, a first code block of the multiple code blocks includes a first part and a second part, the first part includes the first data signal and/or the first control signal, and the second part includes the management signal. In other words, a same first code block can carry the management signal, and can further carry the first data signal and/or the first control signal. Therefore, the first code block carries diverse and flexible types of signals.

In a possible implementation, there are multiple first code blocks, and the management signal periodically appears in the multiple first code blocks. Therefore, subsequently, a position of the management signal in the first code block can be quickly determined based on a pattern of periodic appearance of the management signal in the multiple first code blocks, thereby achieving high efficiency of obtaining the management signal from the first code block.

In a possible implementation, the multiple code blocks include a management code block, and the management code block includes the management signal. In other words, in addition to being carried by the first code block, the management signal can be carried by the management code block. Therefore, a manner of carrying the management signal is flexible. In addition, when the management code block includes a multi-bit management signal, transmission of the management signal is performed through transmission of the management code block, thereby achieving high transmission efficiency of the management signal.

In a possible implementation, the serial channel is used to connect a media access control (media access control, MAC) layer to a physical layer (physical layer, PHY). In this case, the serial channel may be referred to as a serial channel implemented based on a media independent interface (media independent interface, MII). Therefore, the method may be applied to an MII scenario.

In a possible implementation, the serial channel is implemented by using one pin or by using a group of pins. Therefore, a quantity of pins used to implement the serial channel may be small.

In a possible implementation, the serial channel is implemented based on the MII.

In a possible implementation, the to-be-transmitted signal is related to an Ethernet frame. Therefore, the method may be applied to an Ethernet scenario.

In a possible implementation, that the to-be-transmitted signal is related to the Ethernet frame includes at least one of the following: The to-be-transmitted signal is generated based on the Ethernet frame, or the to-be-transmitted signal is used to manage transmission of the Ethernet frame.

In a possible implementation, the management signal includes a first management data input/output (management data input/output, MDIO) signal corresponding to a read operation. The method further includes: receiving a second MDIO signal, where the second MDIO signal is used to perform feedback for the read operation. Therefore, according to the method, exchange of the management signal can be implemented through transmission of the first MDIO signal and the second MDIO signal.

In a possible implementation, a second serial channel for receiving the second MDIO signal is different from the first serial channel for sending the multiple code blocks. In this case, whether a transmitted MDIO signal is the first MDIO signal or the second MDIO signal may be determined based on the serial channel, so as to avoid mistaking a read operation as feedback for the read operation, or mistaking feedback for a read operation as the read operation.

In a possible implementation, the method is applied to a PHY functional module, and the multiple code blocks further include a physical layer channel state indication. Therefore, according to the method, transmission of the physical layer channel state indication can be implemented.

According to a second aspect, a signal processing method is provided. The method includes: receiving multiple code blocks through one serial channel, where the multiple code blocks include a first data signal and/or a first control signal, and the multiple code blocks further include a management signal; and obtaining the management signal and the first data signal and/or the first control signal from the multiple code blocks. The serial channel may be referred to as a first serial channel. In the method, the multiple code blocks include the management signal and the first data signal and/or the first control signal. Therefore, the multiple code blocks can include content of a large quantity of types of signals. When transmission of the multiple code blocks is performed through one serial channel, only a small quantity of pins need to be disposed to implement the serial channel, and then transmission of the first data signal, the first control signal, and the management signal is implemented through the serial channel.

In a possible implementation, a first code block of the multiple code blocks includes a first part and a second part, the first part includes the first data signal and/or the first control signal, and the second part includes the management signal. Obtaining the management signal and the first data signal and/or the first control signal from the multiple code blocks includes: obtaining the first data signal and/or the first control signal from the first part of the first code block; and obtaining the management signal from the second part of the first code block. In the method, a same first code block can carry the management signal, and can further carry the first data signal and/or the first control signal. Therefore, the first code block carries diverse and flexible types of signals, and multiple types of signals can be obtained based on the first code block.

In a possible implementation, there are multiple first code blocks, and the second part periodically appears in the multiple first code blocks. Obtaining the management signal from the second part of the first code block includes: obtaining, from the multiple first code blocks, the second part that periodically appears; and obtaining the management signal from the second part. In the method, a position of the management signal in the first code block can be quickly determined based on a pattern of periodic appearance of the second part in the multiple first code blocks, thereby achieving high efficiency of obtaining the management signal from the first code block.

In a possible implementation, the multiple code blocks include a management code block, and the management code block includes the management signal. Obtaining the management signal from the multiple code blocks includes: obtaining the management signal from the management code block. In other words, in addition to being carried by the first code block, the management signal can be carried by the management code block. Therefore, a manner of carrying the management signal is flexible. In addition, when the management code block includes a multi-bit management signal, transmission of the management signal is performed through transmission of the management code block, thereby achieving high transmission efficiency of the management signal.

In a possible implementation, the serial channel is used to connect a MAC layer to a PHY. In this case, the serial channel may be referred to as a serial channel implemented based on an MII. Therefore, the method may be applied to an MII scenario.

In a possible implementation, the serial channel is implemented by using one pin or by using a group of pins. Therefore, a quantity of pins used to implement the serial channel may be small.

In a possible implementation, the serial channel is implemented based on the MII.

In a possible implementation, the management signal includes a first MDIO signal corresponding to a read operation. The method further includes: sending a second MDIO signal, where the second MDIO signal is used to perform feedback for the read operation. Therefore, according to the method, exchange of the management signal can be implemented through transmission of the first MDIO signal and the second MDIO signal.

In a possible implementation, a second serial channel for sending the second MDIO signal is different from the first serial channel for receiving the multiple code blocks. In this case, whether a transmitted MDIO signal is the first MDIO signal or the second MDIO signal may be determined based on the serial channel, so as to avoid mistaking a read operation as feedback for the read operation, or mistaking feedback for a read operation as the read operation.

In a possible implementation, the method is applied to a MAC functional module, and the multiple code blocks further include a physical layer channel state indication. The method further includes: obtaining the physical layer channel state indication from the multiple code blocks. Therefore, according to the method, transmission of the physical layer channel state indication can be implemented.

According to a third aspect, a signal processing apparatus is provided. The apparatus includes: a transceiver module, configured to perform a receiving and/or sending related operation according to any one of the first aspect or the possible implementations of the first aspect; and a processing module, configured to perform another operation other than the receiving and/or sending related operation according to any one of the first aspect or the possible implementations of the first aspect.

According to a fourth aspect, a signal processing apparatus is provided. The apparatus includes: a transceiver module, configured to perform a receiving and/or sending related operation according to any one of the second aspect or the possible implementations of the second aspect; and a processing module, configured to perform another operation other than the receiving and/or sending related operation according to any one of the second aspect or the possible implementations of the second aspect.

According to a fifth aspect, a signal processing apparatus is provided. The apparatus includes: an encoding module, configured to encode a to-be-transmitted signal to obtain multiple code blocks, where the multiple code blocks include a first data signal and/or a first control signal, and the multiple code blocks further include a management signal; and a sending module, configured to send the multiple code blocks through one serial channel.

In a possible implementation, a first code block of the multiple code blocks includes a first part and a second part, the first part includes the first data signal and/or the first control signal, and the second part includes the management signal.

In a possible implementation, there are multiple first code blocks, and the second part periodically appears in the multiple first code blocks.

In a possible implementation, the multiple code blocks include a management code block, and the management code block includes the management signal.

In a possible implementation, the serial channel is used to connect a MAC layer to a PHY.

In a possible implementation, the serial channel is implemented by using one pin or by using a group of pins.

In a possible implementation, the serial channel is implemented based on the MII.

In a possible implementation, the to-be-transmitted signal is related to an Ethernet frame.

In a possible implementation, that the to-be-transmitted signal is related to the Ethernet frame includes at least one of the following: The to-be-transmitted signal is generated based on the Ethernet frame, or the to-be-transmitted signal is used to manage transmission of the Ethernet frame.

In a possible implementation, the management signal includes a first MDIO signal corresponding to a read operation. The apparatus further includes: a receiving module, configured to receive a second MDIO signal, where the second MDIO signal is used to perform feedback for the read operation.

In a possible implementation, a second serial channel for receiving the second MDIO signal is different from a first serial channel for sending the multiple code blocks.

In a possible implementation, if the apparatus is used for a PHY functional module, the multiple code blocks further include a physical layer channel state indication.

According to a sixth aspect, a signal processing apparatus is provided. The apparatus includes: a receiving module, configured to receive multiple code blocks through one serial channel, where the multiple code blocks include a first data signal and/or a first control signal, and the multiple code blocks further include a management signal; and an obtaining module, configured to obtain the management signal and the first data signal and/or the first control signal from the multiple code blocks.

In a possible implementation, a first code block of the multiple code blocks includes a first part and a second part, the first part includes the first data signal and/or the first control signal, and the second part includes the management signal. The obtaining module is configured to obtain the first data signal and/or the first control signal from the first part of the first code block, and obtain the management signal from the second part of the first code block.

In a possible implementation, there are multiple first code blocks, and the second part periodically appears in the multiple first code blocks. The obtaining module is configured to obtain, from the multiple first code blocks, the second part that periodically appears, and obtain the management signal from the second part.

In a possible implementation, the multiple code blocks include a management code block, and the management code block includes the management signal. The obtaining module is configured to obtain the management signal from the management code block.

In a possible implementation, the serial channel is used to connect a MAC layer to a PHY.

In a possible implementation, the serial channel is implemented by using one pin or by using a group of pins.

In a possible implementation, the serial channel is implemented based on an MII.

In a possible implementation, the management signal includes a first MDIO signal corresponding to a read operation. The apparatus further includes: a sending module, configured to send a second MDIO signal, where the second MDIO signal is used to perform feedback for the read operation.

In a possible implementation, a second serial channel for sending the second MDIO signal is different from a first serial channel for receiving the multiple code blocks.

In a possible implementation, if the apparatus is used for a MAC functional module, the multiple code blocks further include a physical layer channel state indication. The obtaining module is further configured to obtain the physical layer channel state indication from the multiple code blocks.

According to a seventh aspect, a communication apparatus is provided. The apparatus includes a MAC layer circuit, where the MAC layer circuit is configured to perform the signal processing method according to any one of the first aspect and/or the second aspect.

According to an eighth aspect, a communication apparatus is provided. The apparatus includes a PHY circuit, where the PHY circuit is configured to perform the signal processing method according to any one of the first aspect and/or the second aspect.

The signal processing apparatus or the communication apparatus according to any one of the fourth aspect to the eighth aspect may be a chip or a communication device.

According to a ninth aspect, a chip is provided. The chip includes a MAC layer circuit, where the MAC layer circuit is configured to perform the signal processing method according to any one of the first aspect and/or the second aspect.

According to a tenth aspect, another chip is provided. The chip includes: a PHY circuit, where the PHY circuit is configured to perform the signal processing method according to any one of the first aspect and/or the second aspect.

According to an eleventh aspect, a communication system is provided. The communication system includes a MAC layer circuit and a PHY circuit. The MAC layer circuit is configured to perform the signal processing method according to the first aspect, and the PHY circuit is configured to perform the signal processing method according to the second aspect; or the PHY circuit is configured to perform the signal processing method according to the first aspect, and the MAC layer circuit is configured to perform the signal processing method according to the second aspect. The communication system may be implemented by using a chip or a communication device.

It should be understood that, for beneficial effects achieved by the technical solutions according to the third aspect to the eleventh aspect of this application and the corresponding possible implementations, refer to technical effects of the technical solutions according to the first aspect and the second aspect and the corresponding possible implementations of the first aspect and the second aspect. Details are not described herein again.

### BRIEF DESCRIPTION OF DRAWINGS

FIG. 1 is a diagram of pins of an MII in a related technology;
FIG. 2 is a diagram of pins of an RMII in a related technology;
FIG. 3 is a diagram of a host, an SPI, and a MACPHY chip in a related technology;
FIG. 4 is a diagram of supporting a transmission rate of 100 Mbps through an SGMII in a related technology;
FIG. 5 is a diagram of signals transmitted through an MII interface in a related technology;
FIG. 6 is a diagram of transmission of a management signal in a related technology;
FIG. 7 is a diagram of an implementation environment according to an embodiment of this application;
FIG. 8 is a flowchart of a signal processing method according to an embodiment of this application;
FIG. 9 is a diagram of a format of a management frame according to an embodiment of this application;
FIG. 10 is a diagram of a format of another management frame according to an embodiment of this application;
FIG. 11 is a diagram of multiple first code blocks according to an embodiment of this application;
FIG. 12 is another diagram of multiple first code blocks according to an embodiment of this application;
FIG. 13 is still another diagram of multiple first code blocks according to an embodiment of this application;
FIG. 14 is still another diagram of multiple first code blocks according to an embodiment of this application;
FIG. 15 is still another diagram of multiple first code blocks according to an embodiment of this application;
FIG. 16 is a diagram of a management code block according to an embodiment of this application;
FIG. 17 is a diagram of a code block according to an embodiment of this application;
FIG. 18 is a diagram of a second code block according to an embodiment of this application;
FIG. 19 is a diagram of a third code block according to an embodiment of this application;
FIG. 20 is a diagram of a first code block according to an embodiment of this application;
FIG. 21 is a diagram of transmission of an Ethernet frame according to an embodiment of this application;
FIG. 22 is a diagram of misidentification according to an embodiment of this application;
FIG. 23 is a diagram of a transmission process of multiple code blocks according to an embodiment of this application;
FIG. 24 is a diagram of a transmission process of a first code block according to an embodiment of this application;
FIG. 25 is a diagram of another transmission process of a first code block according to an embodiment of this application;
FIG. 26 is a diagram of a transmission process of a management code block according to an embodiment of this application;
FIG. 27 is a diagram of another code block according to an embodiment of this application;
FIG. 28 is a diagram of a transmission process of an H.sig code block according to an embodiment of this application;
FIG. 29 is a diagram of another transmission process of an H.sig code block according to an embodiment of this application;
FIG. 30 is a diagram of still another transmission process of an H.sig code block according to an embodiment of this application;
FIG. 31 is a diagram of another first code block according to an embodiment of this application;
FIG. 32 is a diagram of another transmission process of multiple first code blocks according to an embodiment of this application;
FIG. 33 is a diagram of a newly added code table according to an embodiment of this application;
FIG. 34 is a diagram of a physical layer signaling indicator code according to an embodiment of this application;
FIG. 35 is a flowchart of another signal processing method according to an embodiment of this application;
FIG. 36 is a diagram of a process of inputting multiple code blocks into an RS according to an embodiment of this application;
FIG. 37 is a diagram of a process of synchronization of a management channel according to an embodiment of this application;
FIG. 38 is a diagram of a process of synchronization of a data channel according to an embodiment of this application;
FIG. 39 is a diagram of a structure of a signal processing apparatus according to an embodiment of this application;
FIG. 40 is a diagram of a structure of another signal processing apparatus according to an embodiment of this application;
FIG. 41 is a diagram of a structure of a computer system according to an embodiment of this application; and
FIG. 42 is a diagram of a structure of another computer system according to an embodiment of this application.

### DESCRIPTION OF EMBODIMENTS

Terms used in implementations of this application are merely used to explain embodiments of this application, but are not intended to limit this application. The following describes embodiments of this application with reference to the accompanying drawings.

In the field of communication technologies, a signal transmitting end may process a signal that needs to be sent, to obtain a processing result, and send the processing result to a signal receiving end. The signal transmitting end may encode the signal, and the processing result includes multiple code blocks obtained through encoding. The signal receiving end may decode the multiple code blocks, to restore the signal. In a related technology, only a data signal or a control signal is encoded to obtain multiple code blocks. Due to a small quantity of types of signals encoded to obtain the multiple code blocks, the multiple code blocks carry only information about the data signal or information about the control signal, that is, the multiple code blocks carry a small quantity of types of information.

In addition, in the field of communication technologies, transmission of a signal may be performed between a media access control (media access control, MAC) chip and a physical layer (physical layer, PHY) chip through a media independent interface (media independent interface, MII). For example, in a scenario like industrial internet of things, an internet of things terminal includes a PHY chip and a microcontroller unit (microcontroller unit, MCU), the MCU includes a MAC chip, and transmission of a signal is performed between the PHY chip and the MAC chip through the MII. For another example, in a scenario in which a switch is used, the switch includes a PHY chip and a MAC chip, and transmission of a signal is performed between the PHY chip and the MAC chip through the MII.

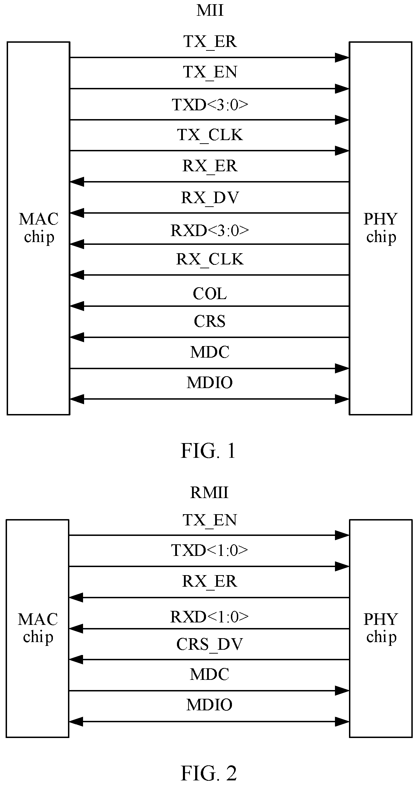

In the related technology, the MII is a parallel interface, and the MII includes a pin used for transmission of a data signal, a pin used for transmission of a control signal, and a pin used for transmission of a management signal. FIG. 1 is a diagram of pins of an MII in a related technology. As shown in FIG. 1, the MII is used to implement signal transmission between a MAC chip and a PHY chip. The MII includes 18 pins. The 18 pins are used for transmission of signals as follows: One pin is used for transmission of a transmit enable (transmit enable, TX_EN) signal, one pin is used for transmission of a transmit error (transmit error, TX_ER) signal, four pins are used for transmission of a transmit data (transmit data, TXD) signal, where the four pins are represented as TXD<3:0> in FIG. 1, one pin is used for transmission of a transmit clock (transmit clock, TX_CLK), one pin is used for transmission of a receive error (receive error, RX_ER) signal, one pin is used for transmission of a receive data valid (receive data valid, RX_DV) signal, four pins are used for transmission of a receive data (receive data, RXD) signal, where the four pins used for transmission of RXD are represented as RXD<3:0> in FIG. 1, one pin is used for transmission of a receive clock (receive clock, RX_CLK), one pin is used for transmission of a collision detection (collision detected, COL) signal, one pin is used for transmission of a carrier sense (carrier sense, CRS) signal, one pin is used for transmission of a management data clock (management data clock, MDC), and one pin is used for transmission of a management data input/output (management data input/output, MDIO) signal.

However, in the scenario like industrial internet of things, packaging costs of a chip increase with a quantity of pins of the chip. Therefore, the quantity of pins of the chip needs to be controlled. When a quantity of pins that can be provided by a chip is limited, a quantity of pins of the MII needs to be reduced, so that more pins of the MCU can be allocated for other functions. In the scenario in which a switch is used, the MAC chip may be included in a switch chip. Because the switch chip usually needs to be connected to a large quantity of Ethernet chips to support a large quantity of Ethernet interfaces, a quantity of pins of the MII on the MAC chip needs to be reduced, so that the switch chip can support a large quantity of Ethernet interfaces.

In a related technology, a reduced media independent interface (reduced media independent interface, RMII) is obtained based on the MII, and signal transmission between a MAC chip and a PHY chip is performed through the RMII. FIG. 2 is a diagram of pins of an RMII in a related technology. As shown in FIG. 2, the RMII is used to implement signal transmission between a MAC chip and a PHY chip. The RMII includes nine pins. The nine pins are used for transmission of signals as follows: One pin is used for transmission of TX_EN, two pins are used for transmission of TXD, where the two pins are represented as TXD<1:0> in FIG. 2, one pin is used for transmission of RX_ER, two pins are used for transmission of RXD, where the two pins used for transmission of RXD are represented as RXD<1:0> in FIG. 2, one pin is used for transmission of a carrier sense data valid (carrier sense data valid, CRS_DV) signal, one pin is used for transmission of an MDC, and one pin is used for transmission of an MDIO signal. However, a quantity of pins of the RMII is still large.

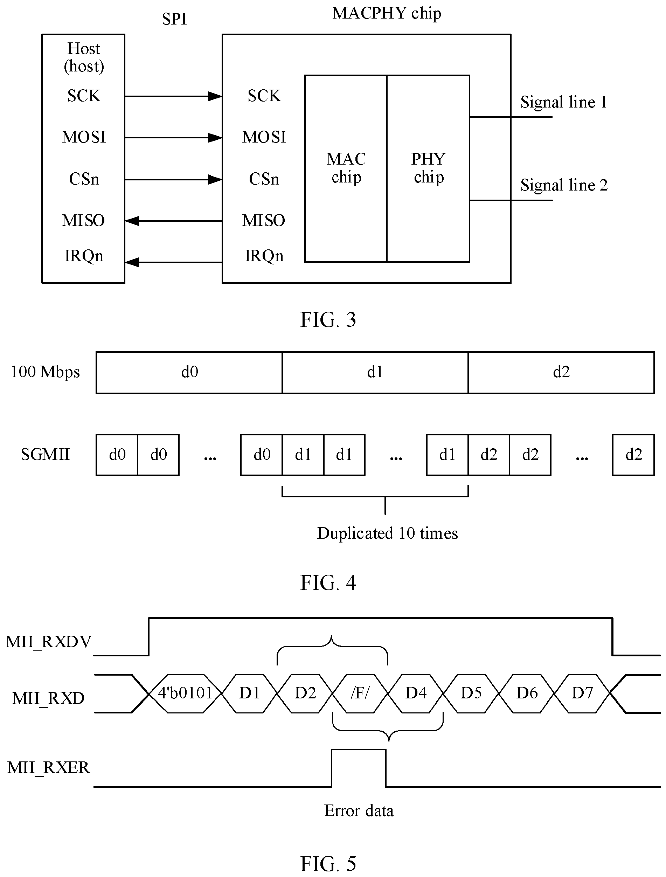

In another related technology, a MAC chip and a PHY chip are integrated into a media access control physical layer (media access control physical layer, MACPHY) chip. An MCU may include the MACPHY chip, and the MACPHY chip is in communication connection with a host (host) through a serial peripheral interface (serial peripheral interface, SPI). FIG. 3 is a diagram of a host, an SPI, and a MACPHY chip in a related technology. As shown in FIG. 3, transmission of a serial clock (serial clock, SCK) signal, a master output slave input (master output slave input, MOSI) signal, n chip select (chip select, CS) signals, a master input slave output (master input slave output, MISO) signal, and n interrupt request (interrupt request, IRQ) signals is performed between the host and the MACPHY chip, where n is a positive integer, n CS signals are represented by CSn shown in FIG. 3, and n IRQ signals are represented by IRQn shown in FIG. 3. The MACPHY chip may further transmit a signal to another chip. For example, as shown in FIG. 3, the MACPHY chip is connected to a signal line 1 and a signal line 2, and the signal line 1 and the signal line 2 may be used to transmit a differential signal to another chip. However, the SPI in the related technology is not applicable to a transmission rate of 100 megabits per second (megabits per second, Mbps), resulting in a limited application scope.

In still another related technology, signal transmission between a MAC chip and a PHY chip is implemented through a serial gigabit media independent interface (serial gigabit media independent interface, SGMII). The SGMII has a bit width of 8 bits (bits) and supports a transmission rate of 1000 megabits per second (megabits per second, Mbps). The SGMII may support lower transmission rates of 10 Mbps and 100 Mbps. When the transmission rate of 10 Mbps is supported through the SGMII, data is duplicated 100 times, and then transmission of data obtained through duplication is performed. When the transmission rate of 100 Mbps is supported through the SGMII, data is duplicated 10 times, and then transmission of data obtained through duplication is performed. FIG. 4 is a diagram of supporting a transmission rate of 100 Mbps through an SGMII in a related technology. As shown in FIG. 4, data that needs to be transmitted at a transmission rate of 100 Mbps includes d0, d1, and d2. Each piece of data that needs to be transmitted at the transmission rate of 100 Mbps is duplicated 10 times, and then transmission of data obtained through duplication may be performed through an SGMII, enabling the SGMII to support the transmission rate of 100 Mbps. However, a manner of achieving compatibility with a low transmission rate by duplicating data multiple times causes high transmission costs and power consumption.

In addition, the SGMII has a data bit width of 8 bits, and the MII has a data bit width of 4 bits. Therefore, replacing the MII with the SGMII causes a problem of a data bit width mismatch due to different data bit widths. For example, FIG. 5 is a diagram of signals transmitted through an MII interface in a related technology. As shown in FIG. 5, RX_DV indicates a 4-bit sequence 0101, D1, D2, /F/, and D4 to D7 are valid data, and RX_ER indicates that /F/ is error data, and D1, D2, and D4 to D7 are all error-free data. D1, D2, /F/, and D4 to D7 are all 4 bits. For the error data /F/ transmitted through the MII, if the SGMII is used to replace the MII, data transmitted through the SGMII for replacing the error data /F/ displaces D2 or D4, to meet a requirement for the data bit width of 8 bits of the SGMII. In other words, the data bit width of 8 bits of the SGMII cannot match the data bit width of 4 bits of the MII.

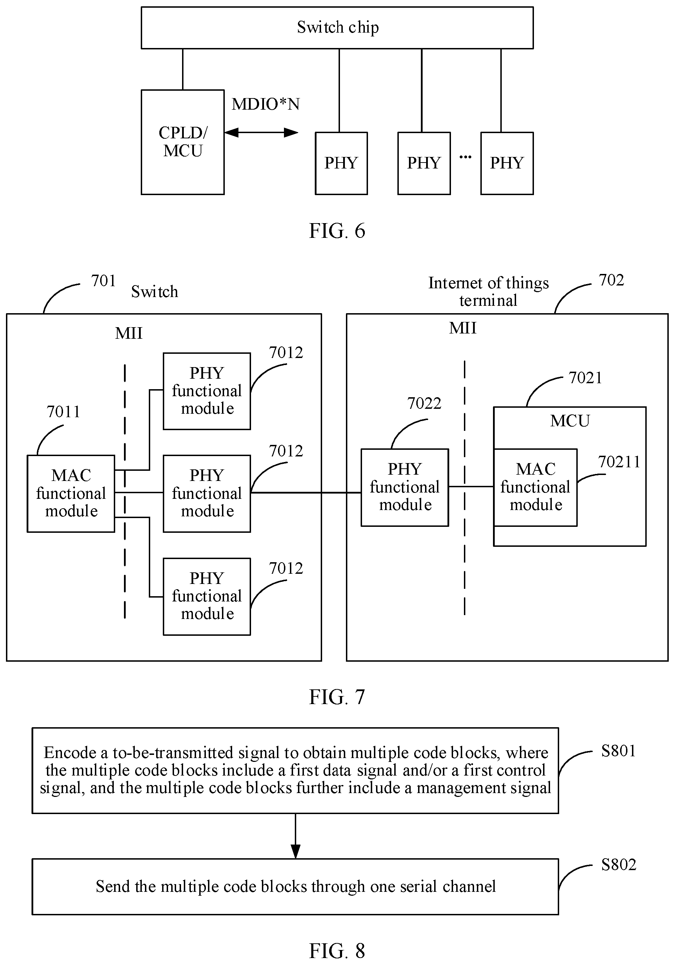

In still another related technology, transmission of a management signal is performed through an independent channel. For example, FIG. 6 is a diagram of transmission of a management signal in a related technology. A switch chip of a switch includes a MAC chip. In addition, as shown in FIG. 6, the switch chip is connected to multiple PHY chips, and the switch chip is further connected to a complex programmable logic device (complex programmable logic device, CPLD) or an MCU. The switch chip establishes, by using the CPLD or the MCU, a channel for transmission of a management signal with each of N PHY chips, where N is a positive integer. In other words, transmission of a management signal is performed between the switch chip and each of the N PHY chips by using the CPLD or the MCU, where the management signal includes an MDIO signal. However, a manner of establishing, by using a CPLD or an MCU, a channel for transmission of a management signal causes high costs of a device for transmission of a management signal and a heavy development workload.

An embodiment of this application provides a signal processing method, to implement signal processing by encoding and decoding a signal that needs to be transmitted. The method can be applied to a scenario in which transmission of a signal is performed through an MII. In other words, the signal that needs to be transmitted is a signal transmitted through the MII. The method can be further applied to another scenario other than the MII. FIG. 7 is a diagram of an implementation environment according to an embodiment of this application. The method may be applied to the implementation environment shown in FIG. 7. An MII scenario is used as an example for the implementation environment shown in FIG. 7. The method can be further applied to another implementation environment. For example, an implementation environment to which the method is applied includes a chip 1 and a chip 2, the chip 1 is connected to the chip 2, and the method may be applied to the chip 1 or the chip 2.

Refer to FIG. 7. The implementation environment includes a switch 701 and an internet of things terminal 702. The switch 701 includes a MAC functional module 7011 and PHY functional modules 7012, and transmission of a signal is performed between the MAC functional module 7011 and each PHY functional module 7012 through an MII. The internet of things terminal 702 includes a MAC functional module 70211 and a PHY functional module 7022, and transmission of a signal is performed between the MAC functional module 70211 and the PHY functional module 7022 through an MII. Signal transmission may be performed between the PHY functional module 7012 and the PHY functional module 7022. In some embodiments, the internet of things terminal 702 includes an MCU 7021 and a PHY functional module 7022, and the MCU 7021 includes a MAC functional module 70211. In some embodiments, one or more of the MAC functional module 7011, the PHY functional module 7012, the MAC functional module 70211, and the PHY functional module 7022 may be located in a separate chip, or in a separate die (die), or in one or more cores of a multi-core chip. The signal processing method provided in this embodiment of this application may be applied to signal transmission between the MAC functional module 7011 and the PHY functional module 7012, or may be applied to signal transmission between the MAC functional module 70211 and the PHY functional module 7022. A quantity of switches 701, a quantity of MAC functional modules 7011, a quantity of PHY functional modules 7012, a quantity of internet of things terminals 702, a quantity of MCUs 7021, a quantity of MAC functional modules 70211, and a quantity of PHY functional modules 7022 shown in FIG. 7 are merely examples. This is not limited in this embodiment of this application. For example, the switch 701 and the internet of things terminal 702 may be single pair ethernet (single pair ethernet, SPE) devices or advanced physical layer (advanced physical layer, APL) devices.

The signal processing method provided in this embodiment of this application may be shown in FIG. 8. The following describes the method with reference to the implementation environment shown in FIG. 7. The method may be applied to the MAC functional module or the PHY functional module shown in FIG. 7. As shown in FIG. 8, the method includes but is not limited to S801 and S802.

S801: Encode a to-be-transmitted signal to obtain multiple code blocks, where the multiple code blocks include a first data signal and/or a first control signal, and the multiple code blocks further include a management signal.

In a possible implementation, the to-be-transmitted signal includes at least one of the first data signal and/or the first control signal, and the to-be-transmitted signal further includes the management signal. A type of a signal included in the multiple code blocks is determined based on a type of a signal included in the to-be-transmitted signal. Therefore, when the to-be-transmitted signal includes the first data signal, the multiple code blocks include the first data signal; when the to-be-transmitted signal includes the first control signal, the multiple code blocks include the first control signal; or when the to-be-transmitted signal includes the management signal, the multiple code blocks include the management signal. In this embodiment of this application, the first data signal may be a signal used for data transmission, the first control signal may be a signal used to control data transmission, and the management signal may be another signal other than the first data signal and the first control signal.

An example in which the to-be-transmitted signal includes a signal to be transmitted through the MII is used. The management signal includes an MDIO signal. For example, the method is applied to the MAC functional module, and the MAC functional module includes a station management entity (station management entity, STA). In this case, the management signal includes the MDIO signal driven by the STA. For another example, the method is applied to the PHY functional module. In this case, the management signal includes the MDIO signal driven by the PHY functional module. For a manner in which the STA drives the MDIO signal, refer to a manner in which the STA drives the MDIO signal in the Institute of Electrical and Electronics Engineers (Institute of Electrical and Electronics Engineers, IEEE) 802.3 standard. For a manner in which the PHY functional module drives the MDIO signal, refer to a manner in which the PHY functional module drives the MDIO signal in the IEEE 802.3 standard. Details are not described herein again.

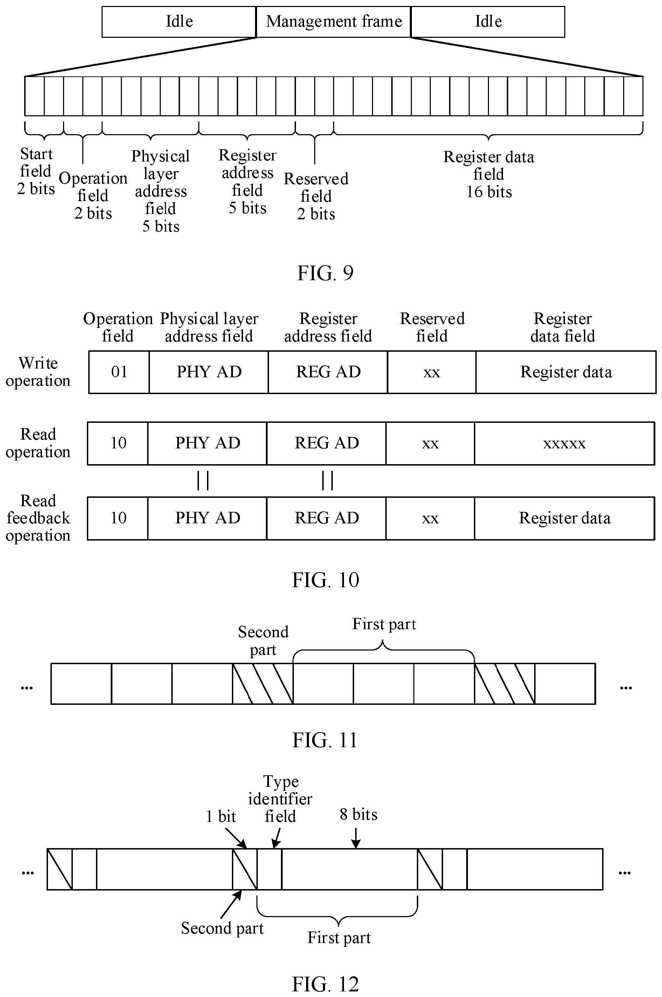

In a possible implementation, the MDIO signal is related to a management frame (management frame). For example, bits of the MDIO signal are used to form the management frame. The management frame includes an operation (operation, OP) field, and an operation type indicated by the operation field includes any one of a write operation, a read operation, or a read feedback operation. For example, when the method is applied to the MAC functional module, the operation type indicated by the operation field is a write operation or a read operation; or when the method is applied to the PHY functional module, the operation type indicated by the operation field is a read feedback operation. The management frame may further include another field other than the operation field. FIG. 9 is a diagram of a format of a management frame according to an embodiment of this application. As shown in FIG. 9, a management frame includes a start (start) field, an operation (operation, OP) field, a physical layer address (physical layer address, PHY AD) field, a register address (register address, REG AD) field, a reserved (reserved, RSV) field, and a register data (register data) field. The start field indicates that transmission of the management frame starts, the physical layer address field indicates an address of a PHY functional module in which a register on which an operation is performed is located, the register address field indicates an address of the register, the register data field indicates data of the performed operation, and the reserved field may be a preset value. As shown in FIG. 9, a length of the start field is 2 bits, a length of the operation field is 2 bits, a length of the physical layer address field is 5 bits, a length of the register address field is 5 bits, a length of the reserved field is 2 bits, and a length of the register data field is 16 bits. FIG. 10 is a diagram of a format of another management frame according to an embodiment of this application. Refer to FIG. 10. When the method is applied to the MAC functional module and data needs to be written into a register of the PHY functional module, an operation type indicated by an operation field is a write operation, and a value of the operation field may be 01. A physical layer address field indicates an address of the PHY functional module, a register address field indicates an address of the register, a value of a reserved field is a first preset value, where xx may represent the first preset value in FIG. 10, and a register data field indicates data that needs to be written into the register.

When the method is applied to the MAC functional module, and a value in a register of the PHY functional module needs to be read, an operation type indicated by an operation field is a read operation, and a value of the operation field may be 10. A physical layer address field indicates an address of the PHY functional module, a register address field indicates an address of the register, and a value of a reserved field is a first preset value. Because a first processor is not used to write data into a register, a value of a register data field may be a second preset value, where xxxxx may represent the second preset value in FIG. 10.

When the method is applied to the PHY functional module and data in a register of the PHY functional module needs to be fed back to the MAC functional module, an operation type indicated by an operation field is a read feedback operation, and a value of the operation field may be 10. A physical layer address field indicates an address of the PHY functional module, a register address field indicates an address of the register, a value of a reserved field is a first preset value, and a value of a register data field indicates data read from the register. For example, the read operation and the read feedback operation are for a same register. Therefore, as shown in FIG. 10, values of physical layer address fields corresponding to the read operation and the read feedback operation are the same, and values of register address fields corresponding to the read operation and the read feedback operation are the same.

The value of the operation field, the value of the reserved field, and the value of the register data field when the operation type is the read operation are merely used as examples for description. A person skilled in the art may set the value based on experience or an actual requirement. This is not limited in this embodiment of this application. In a possible implementation, regardless of whether the method is applied to the MAC functional module or the PHY functional module, the management signal is obtained based on a management frame and an idle (idle), and the idle may be before or after the management frame. For example, refer to FIG. 9. In addition to the management frame, there are idle symbols before and after the management frame, and the management frame and the idle symbols are used to obtain the management signal.

An example in which the to-be-transmitted signal includes a signal to be transmitted through the MII is still used for description. When the method is applied to the MAC functional module, both the first data signal and the first control signal may be collectively represented by TX_EN, TX_ER, and TXD shown in FIG. 1. In other words, whether a signal to be transmitted on TXD is a data signal or a control signal is indicated by validity and invalidity of TX_EN and TX_ER. The data signal includes but is not limited to data (data) included in the Ethernet frame, and the control signal includes but is not limited to a preamble (preamble), low power idle (low power idle, LPI), and an end-of-frame delimiter (end-of-frame delimiter, EFD) during transmission of the Ethernet frame. When the method is applied to the PHY functional module, both the first data signal and the first control signal may be collectively represented by RX_DV, RX_ER, and RXD shown in FIG. 1. In other words, whether a signal to be transmitted on RXD is a data signal or a control signal is indicated by validity and invalidity of RX_DV and RX_ER.

In a possible implementation, the to-be-transmitted signal is related to an Ethernet frame. In other words, the method may be applied to an Ethernet scenario. For example, the to-be-transmitted signal includes a first data signal and/or a first control signal, and the first data signal or the first control signal or both are generated based on an Ethernet frame that needs to be transmitted. The to-be-transmitted signal further includes a management signal, and the management signal may be used to manage transmission of the Ethernet frame. For example, when the method is applied to the MAC functional module for execution, the MAC functional module converts the Ethernet frame that needs to be transmitted into a parallel signal to be transmitted through the MII, and obtains the to-be-transmitted signal based on the parallel signal to be transmitted through the MII. The parallel signal to be transmitted through the MII is a signal to be transmitted by using multiple pins of the MII shown in FIG. 1. For example, some or all of data signals to be transmitted through the MII are used as first data signals, and some or all of control signals to be transmitted through the MII are used as first control signals.

Alternatively, both the first data signal and the first control signal may be generated based on the Ethernet frame. For example, when the method is applied to the MAC functional module, the MAC functional module obtains the Ethernet frame, and generates the first data signal based on the Ethernet frame. For another example, when the method is applied to the MAC functional module, the MAC functional module obtains the Ethernet frame, and generates a first sub-signal of the first control signal based on the Ethernet frame. In some embodiments, the first processor may further generate a second sub-signal of the first control signal. The first sub-signal may be a signal obtained based on content of the Ethernet frame. For example, the first sub-signal is a control signal to be transmitted through the MII and obtained based on the Ethernet frame. The second sub-signal may be an error signal used for transmission of error information. For example, an error signal is generated when transmission of the Ethernet frame needs to be interrupted. For another example, after transmission of the Ethernet frame is completed, if occupancy of a channel needs to be maintained, an error signal is generated. A format of the error signal is not limited in this embodiment of this application. In other words, if the to-be-transmitted signal includes the first data signal, the first data signal is obtained based on the Ethernet frame; or if the to-be-transmitted signal includes the first control signal, the first control signal includes at least one of the first sub-signal obtained based on the Ethernet frame or the generated second sub-signal.

In a possible implementation, if the Ethernet frame carries data, the to-be-transmitted signal includes a first data signal generated based on the carried data; or if the Ethernet frame does not carry data, the to-be-transmitted signal does not include a first data signal. For example, the first sub-signal of the first control signal is obtained based on another part of the Ethernet frame other than an Ethernet start-of-stream delimiter, or is obtained based on another part of the Ethernet frame other than an Ethernet start-of-stream delimiter and an Ethernet end-of-stream delimiter. In this embodiment of this application, the Ethernet frame may be further used to obtain a second control signal, or obtain a second control signal and a third control signal. For example, the second control signal is generated based on the Ethernet start-of-stream delimiter of the Ethernet frame. Alternatively, the second control signal is generated based on the Ethernet start-of-stream delimiter of the Ethernet frame, and the third control signal is generated based on the Ethernet end-of-stream delimiter of the Ethernet frame. When the second control signal is obtained, the to-be-transmitted signal may include the second control signal. When the second control signal and the third control signal are obtained, the to-be-transmitted signal may include the second control signal and the third control signal.

When the to-be-transmitted signal is obtained, the to-be-transmitted signal may be encoded, to obtain multiple code blocks. In a possible implementation, a first code block of the multiple code blocks includes a first part and a second part, the first part includes the first data signal and/or the first control signal, and the second part includes the management signal. For example, the first part is obtained by encoding a first data bit group of the first data signal and/or a first control bit group of the first control signal, and the second part is obtained based on the management signal. In this embodiment of this application, the first data bit group of the first data signal may include some or all bits of the first data signal, and the first control bit group of the first control signal may include some or all bits of the first control signal. The first part may include at least one code block, and the second part may include at least one code block or at least one unencoded bit. The at least one code block included in the second part is obtained by encoding a bit of the management signal. A quantity of bits that are encoded to obtain one code block is not limited in this embodiment of this application. In this embodiment of this application, positions of bits obtained based on the first data signal may be referred to as a data channel, positions of bits obtained based on the first control signal may be referred to as a control channel, and positions of bits obtained based on the management signal may be referred to as a management channel.

In a possible implementation, the code block included in the first part is obtained through any one of the following encoding schemes: 4B/5B encoding, 8B/9B encoding, 8B/10B encoding, 64B/65B encoding, 64B/66B encoding, or 80B/81B encoding. In some embodiments, if the second part includes at least one unencoded bit, the at least one bit included in the second part may be a transformed bit or an untransformed bit. A transformation manner is not limited in this embodiment of this application. For example, the transformation manner includes sequential transformation, and the second part includes multiple bits on which sequential transformation is performed. If the second part includes at least one code block obtained through encoding, the code block included in the second part is obtained through any one of the following encoding schemes: 4B/5B encoding, 8B/9B encoding, 8B/10B encoding, 64B/65B encoding, 64B/66B encoding, or 80B/81B encoding. In some embodiments, when both the first part and the second part of the first code block include a code block obtained through encoding, the encoding scheme of the code block of the first part may be the same as or different from the encoding scheme of the code block of the second part. Therefore, the encoding scheme of the code block in the first part and the encoding scheme of the code block in the second part are flexible.

For example, when there are multiple first code blocks, a management signal periodically appears in the multiple first code blocks. FIG. 11 is a diagram of multiple first code blocks according to an embodiment of this application. Refer to FIG. 11. Each first code block includes a first part and a second part, and the first part and the second part alternately appear in the multiple first code blocks, so that a management signal periodically appears in the multiple first code blocks.

In a possible implementation, an encoding result of the first part indicates that the first part is obtained by encoding the first data bit group of the first data signal, by encoding the first control bit group of the first control signal, or by encoding the first data bit group of the first data signal and the first control bit group of the first control signal. For example, the first part includes at least one code block obtained through 4B/5B encoding. For any code block of the at least one code block, an overall encoding status of the any code block indicates that the code block is obtained by encoding the first data bit group of the first data signal, or by encoding the first control bit group of the first control signal.

For another example, the first part includes at least one code block obtained through 8B/10B encoding. For any code block of the at least one code block, an overall encoding status of the any code block indicates that the code block is obtained by encoding the first data bit group of the first data signal, by encoding the first control bit group of the first control signal, or by encoding the first data bit group of the first data signal and the first control bit group of the first control signal. Regardless of whether the code block of the first part is obtained through 4B/5B encoding or 8B/10B encoding, for a manner in which a code block indicates a bit source as a whole, refer to related content in the IEEE 802.3 standard that a code block obtained through 4B/5B encoding and 8B/10B encoding indicates a bit source as a whole. Details are not described herein again.

In another possible implementation, some content in the first part indicates a bit source of the first part. For example, the first part includes a type identifier field, where the type identifier field indicates that the first part is obtained by encoding the first data bit group of the first data signal, by encoding the first control bit group of the first control signal, or by encoding the first data bit group of the first data signal and the first control bit group of the first control signal. In this embodiment of this application, a type of a signal for obtaining the first part may be referred to as a bit source of the first part.

For example, the first part includes at least one code block, each code block includes a type identifier field, the type identifier field indicates a type of the any code block, and a type of a code block corresponds to a bit source. Therefore, for any code block, a type identifier field of the any code block can indicate a bit source of the any code block. For type identifier fields of code blocks obtained through different encoding schemes, refer to fields used to identify types in the code blocks obtained through the encoding schemes, as specified in the IEEE 802.3 standard. For example, when the any code block is obtained through any one of the following encoding schemes: 8B/9B encoding, 64B/65B encoding, or 80B/81B encoding, the type identifier field is at a bit position of a most significant bit of the code block. For another example, when the any code block is obtained through 64B/66B encoding, the type identifier field occupies first two bit positions of the code block.

In some embodiments, the type identifier field indicates that the first part is obtained by encoding the first data bit group of the first data signal, and another part in the first part other than the type identifier field may be referred to as a data field. In some embodiments, the type identifier field indicates that the first part is obtained by encoding the first control bit group of the first control signal, or by encoding the first data bit group of the first data signal and the first control bit group of the first control signal, and another part in the first part other than the type identifier field may be referred to as a control field.

FIG. 12 is another diagram of multiple first code blocks according to an embodiment of this application. As shown in FIG. 12, for any first code block, a first part of the any first code block is obtained based on at least one of the first data bit group of the first data signal or the first control bit group of the first control signal, and a second part of the any first code block includes a bit of the management signal. In the first code block shown in FIG. 12, the first part of the first code block is obtained through 8B/9B encoding, the first part includes 9 bits, and a most significant bit of the 9 bits is used as the type identifier field. The second part of the first code block includes 1 bit.

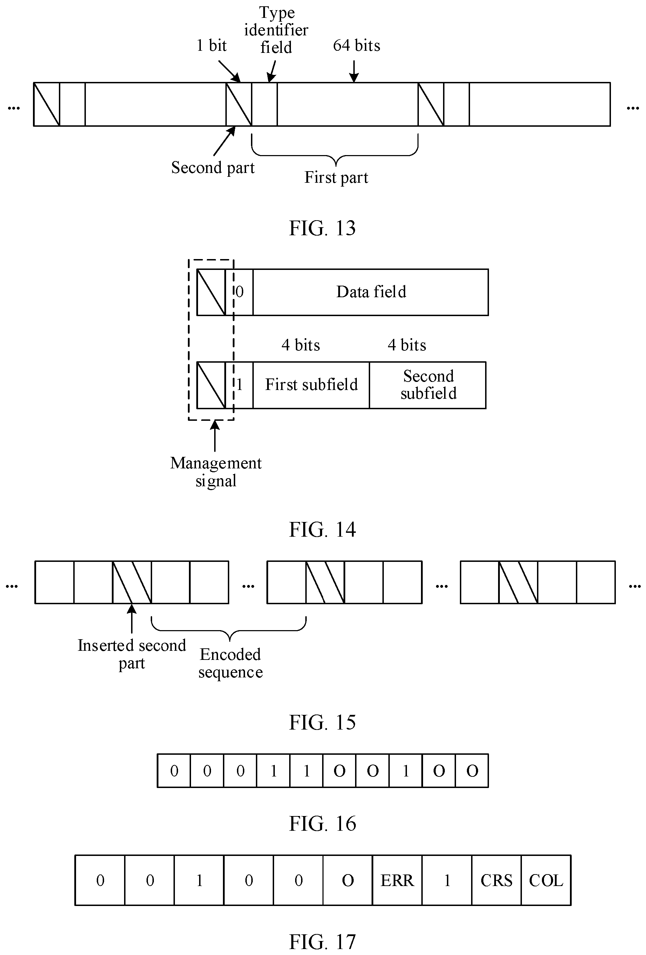

FIG. 13 is still another diagram of multiple first code blocks according to an embodiment of this application. As shown in FIG. 13, for any first code block, a first part of the any first code block is obtained based on at least one of the first data bit group of the first data signal or the first control bit group of the first control signal, and a second part of the any first code block includes a bit of the management signal. In the first code block shown in FIG. 13, the first part of the first code block is obtained through 64B/65B encoding, the first part includes 65 bits, and a most significant bit of the 65 bits is used as the type identifier field. The second part of the first code block includes 1 bit.

A manner in which the type identifier field indicates the bit source of the first part is not limited in this embodiment of this application. For example, if the type identifier field includes 1 bit, and a value of the bit is a first value, the first part is obtained by encoding the first data bit group of the first data signal. In other words, the first part includes the type identifier field and the data field, and content of the data field is obtained by encoding the first data bit group of the first data signal. If the value of the bit is a second value, the first part is obtained by encoding the first control bit group of the first control signal, or by encoding the first data bit group of the first data signal or the first control bit group of the first control signal. In other words, the first part includes the type identifier field and the control field, and content of the control field is obtained by encoding the first control bit group of the first control signal, or by encoding the first data bit group of the first data signal and the first control bit group of the first control signal. For example, the first value is 0, and the second value is 1.

In a possible implementation, the control field includes a first subfield and a second subfield. Content of the first subfield is obtained by encoding the first data bit group of the first data signal, and content of the second subfield is obtained by encoding the first control bit group of the first control signal. Alternatively, both content of the first subfield and content of the second subfield are obtained by encoding the first control bit group of the first control signal, and a first bit used to obtain the content of the first subfield is different from a first bit used to obtain the content of the second subfield.

FIG. 14 is still another diagram of multiple first code blocks according to an embodiment of this application. As shown in FIG. 14, a type identifier field of a first part of one first code block includes 1 bit, and a value of the bit is 0, indicating that the rest of the first part other than the type identifier field is a data field, where the data field includes 8 bits. A second part of the first code block includes a 1-bit management signal. A type identifier field of a first part of another first code block includes 1 bit, and a value of the bit is 1, indicating that the rest of the first part other than the type identifier field is a control field, where the control field includes 8 bits. The control field includes a first subfield and a second subfield, and both the first subfield and the second subfield include 4 bits. Content of the second subfield may be indicated based on content of the first subfield. For example, the first subfield is a first control code. In this case, the second subfield is an extended control code corresponding to the first control code. Alternatively, the first subfield is a second control code. In this case, the second subfield carries nibble data. When the second subfield is the extended control code, the content of the second subfield is obtained by encoding the first control bit group of the first control signal. When the second subfield carries the nibble data, the content of the second subfield is obtained by encoding the first data bit group of the first data signal.

Lengths of the first subfield and the second subfield that are shown in FIG. 14 are merely examples. The first subfield and the second subfield may alternatively have other lengths. For example, the first subfield includes 2 bits, and the second subfield includes 6 bits. The second part of the first code block shown in FIG. 14 includes 1 bit of the management signal, and both second parts of the two first code blocks are used to carry the management signal.

In a possible implementation, at least one of the first data bit group of the first data signal or the first control bit group of the first control signal is encoded to obtain a first part of each first code block, and a second part of each first code block is inserted between multiple first parts, so as to obtain each first code block. The second part includes but is not limited to at least one code block obtained based on a management signal or at least one bit of an unencoded management signal.

FIG. 15 is still another diagram of multiple first code blocks according to an embodiment of this application. As shown in FIG. 15, at least one of the first data bit group of the first data signal or the first control bit group of the first control signal is encoded to obtain an encoded sequence. A first part of each first code block is obtained based on the encoded sequence, and then a second part of each first code block is inserted, to obtain each first code block. In this embodiment of this application, one encoded symbol may be one code block. Insertion of the second part may cause an interruption in the encoded sequence. After multiple first code blocks are obtained, multiple code blocks used to identify a boundary of the encoded sequence may be located in a first part of a same first code block or located in first parts of the multiple first code blocks. Therefore, when the boundary of the encoded sequence needs to be identified subsequently, the boundary of the encoded sequence may be identified based on the first part of the same first code block or based on the first parts of the multiple first code blocks.

In a possible implementation, the first part of the first code block further carries an unencoded second data bit group of the first data signal and/or an unencoded second control bit group of the first control signal. For example, the first part of the first code block carries at least one code block obtained by encoding the first data bit group of the first data signal, and further carries the unencoded second data bit group. Alternatively, the first part of the first code block carries at least one code block obtained by encoding the first control bit group of the first control signal, and further carries the unencoded second control bit group. Alternatively, the first part of the first code block carries at least one code block obtained by encoding the first control bit group of the first control signal, and further carries the unencoded second data bit group. The second data bit group may include some or all bits of the first data signal other than the first data bit group, and the second control bit group may include some or all bits of the first control signal other than the first control bit group. Specific bits used as bits of the first data bit group and specific bits used as bits of the second data bit group of the first data signal may be determined based on experience or an actual requirement. Specific bits used as bits of the first control bit group and specific bits used as bits of the second control bit group of the first control signal may also be determined based on experience or an actual requirement. This is not limited in this embodiment of this application. Because the first part may include only a code block obtained through encoding, or may include a code block obtained through encoding and an unencoded bit, the first part carries the first data signal or the first control signal in a flexible manner.

In some embodiments, the multiple code blocks further include a management code block, where the management code block includes a management signal. In other words, the management signal and the first data signal and/or the first control signal are carried in different code blocks. For example, the management code block includes a third control code and a management signal, where the third control code indicates that the code block is a management code block. FIG. 16 is a diagram of a management code block according to an embodiment of this application. As shown in FIG. 16, a third control code is 00011, and a bit position used to carry a management signal is represented by "O". The management code block may also be referred to as a PHY operation, administration, and maintenance (operation, administration, and maintenance, OAM) code block. The management signal may alternatively be carried at another bit position based on experience or a requirement.

In some embodiments, the method is applied to the PHY functional module, the multiple code blocks further include a physical layer channel state indication, and the physical layer channel state indication includes but is not limited to one or two of COL and CRS. FIG. 17 is a diagram of a code block according to an embodiment of this application. As shown in FIG. 17, the code block includes a fourth control code and a physical layer channel state indication. The fourth control code is 00100, and the physical layer channel state indication includes COL and CRS. The code block further includes an error indication (error, ERR). The code block may also be used to carry a management signal. For example, a bit position represented by "O" shown in FIG. 17 is used to carry the management signal. In other words, the physical layer signal state indication and the management signal may be encoded into a same code block. The management signal, ERR, COL, and CRS may alternatively be carried at other bit positions based on experience or a requirement.

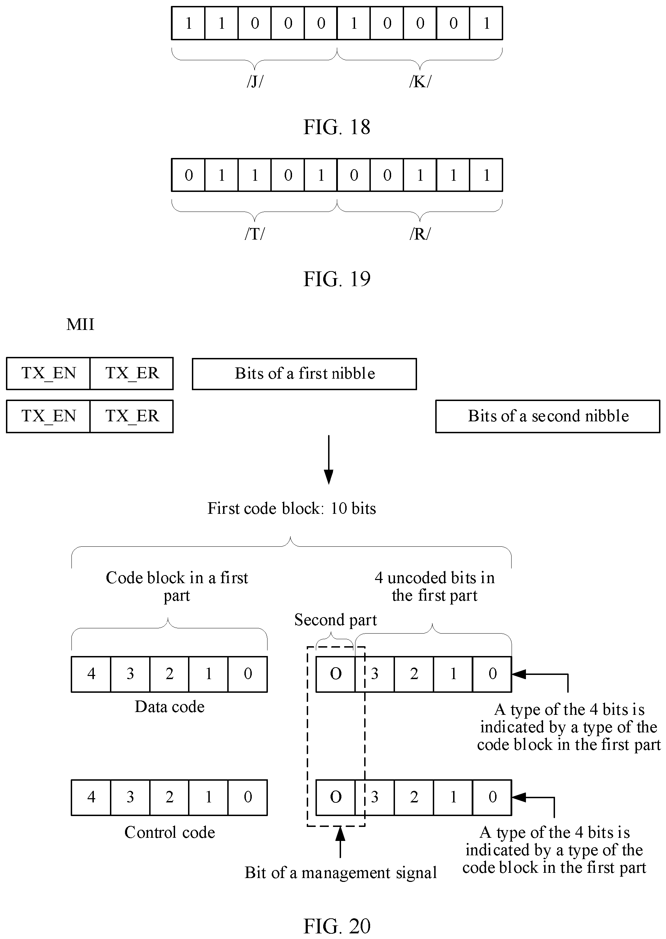

In some embodiments, the to-be-transmitted signal includes another signal in addition to the management signal, the first data signal, and the first control signal. When the another signal is included, the another signal is encoded to obtain at least one code block. For example, if the to-be-transmitted signal includes a second control signal, the second control signal is encoded to obtain a second code block, where the second control signal is obtained based on an Ethernet start-of-stream delimiter of an Ethernet frame. Therefore, the multiple code blocks obtained by encoding the to-be-transmitted signal include the second code block. FIG. 18 is a diagram of a second code block according to an embodiment of this application. As shown in FIG. 18, the second code block includes a /J/ code and a /K/ code that are obtained through 4B/5B encoding in the IEEE 802.3 standard. The second code block may indicate a start-of-stream delimiter (start-of- stream delimiter, SSD).

If the to-be-transmitted signal includes a third control signal, the third control signal is encoded to obtain a third code block, where the third control signal is obtained based on an Ethernet end-of-stream delimiter of an Ethernet frame. Therefore, the multiple code blocks obtained by encoding the to-be-transmitted signal include the third code block. FIG. 19 is a diagram of a third code block according to an embodiment of this application. As shown in FIG. 19, the third code block includes a /T/ code and an /R/ code obtained through 4B/5B encoding in the IEEE 802.3 standard. The third code block may indicate an end-of-stream delimiter (end-of-stream delimiter, ESD). Because the multiple code blocks further include the second code block and the third code block, the multiple code blocks are of diverse types, and a manner of encoding the to-be-transmitted signal is flexible.

The following describes the multiple obtained code blocks by using the first part of the first code block obtained through 4B/5B encoding as an example.

The 4B/5B encoding scheme specified in the IEEE 802.3 standard is encoding a bit based on a nibble width, and an encoded symbol obtained through encoding is used for representing a data code and a control code. Coding efficiency of 4B/5B encoding is 4/5 × 100% = 80%. FIG. 20 is a diagram of a first code block according to an embodiment of this application. Refer to FIG. 20. The first code block includes a first part and a second part, where the first part includes one code block and 4 unencoded bits that are obtained through 4B/5B encoding, and the second part includes 1 bit. The bits used to obtain the code block may be the first data bit group of the first data signal or the first control bit group of the first control signal. When the code block is obtained based on the first data bit group, the unencoded bits may be obtained based on the second data bit group. When the code block is obtained based on the first control bit group, the unencoded bits may be obtained based on the second data bit group or the second control bit group.

For example, the code block included in the first part is obtained using the 4B/5B encoding scheme specified in the IEEE 802.3 standard, and the code block obtained through encoding may be a data code or a control code. A specific type of the 4 unencoded bits in the first part may be indicated by a type of the code block in the first part. For example, if the code block is the data code, the 4 unencoded bits are the second data bit group of the first data signal. If the code block is a control code, the 4 unencoded bits are the second control bit group of the first control signal or the second data bit group of the first data signal. If the code block is a control code, a specific type of signal whose second bit is included in the second part may be determined based on a type of the control code of the code block.

In some embodiments, a state of a bit used to obtain the first part may be indicated by TX_EN and TX_ER transmitted through the MII. For example, TX_EN and TX_ER in FIG. 20 can indicate that bits of a first nibble are the first data bit group of the first data signal or the first control bit group of the first control signal, and can further indicate that bits of a second nibble are the second data bit group of the first data signal or the second control bit group of the first control signal. The bits of the first nibble are used to obtain the code block in the first part, and the bits of the second nibble are used to obtain the unencoded bits in the first part.

A bit of a management signal are used to obtain the second part of the first code block. As shown in FIG. 20, the second part includes 1 bit of the management signal, and the bit is represented by "O". As shown in FIG. 20, the second part may be located between the code block and the unencoded bits included in the first part, or the second part may be located between the unencoded bits, or before or after the first part. This is not limited in this embodiment of this application. The second part may further include 4 bits of the second nibble, where the 4 bits may be the second data bit group of the first data signal or the second control bit group of the first control signal.

In a possible implementation, the 4 unencoded bits are an untransformed second data bit group or second control bit group, or a transformed second data bit group or second control bit group. A manner of transforming a second data bit group and a second control bit group is not limited in this embodiment of this application. For example, a sequence of bits of the second data bit group or the second control bit group is transformed. With reference to the first code block shown in FIG. 20, if the first part is obtained based on 8 bits of the first data signal, based on 8 bits of the first control signal, or based on 4 bits of the first data signal and 4 bits of the first control signal, coding efficiency of the first code block is 8/10 × 100% = 80%.

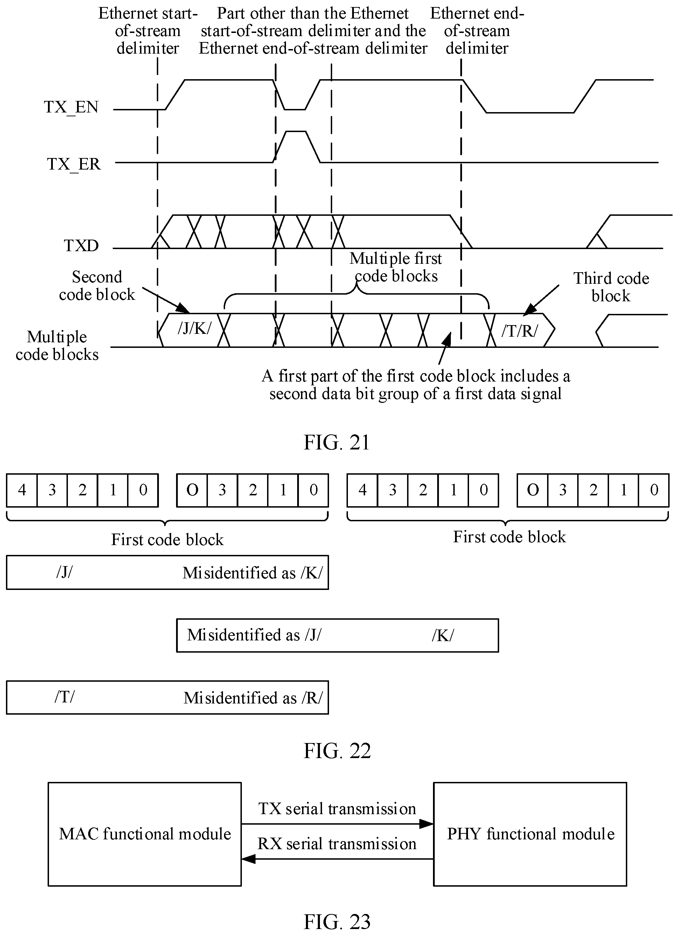

In this embodiment of this application, consecutive /J/ and /K/ codes are used for stream synchronization and for representing an SSD. When the consecutive /J/ and /K/ codes are identified, it is determined that transmission of an Ethernet frame starts. Consecutive /T/ and /R/ codes are used for representing an ESD. Therefore, when the consecutive /T/ and /R/ codes are identified, it is determined that transmission of the Ethernet frame ends. FIG. 21 is a diagram of transmission of an Ethernet frame according to an embodiment of this application. As shown in FIG. 21, the Ethernet frame is represented by TX_EN, TX_ER, and TXD transmitted through an MII, and the Ethernet frame includes an Ethernet start-of-stream delimiter, an Ethernet end-of-stream delimiter, and a part of the Ethernet frame other than the Ethernet start-of-stream delimiter and the Ethernet end-of-stream delimiter. A signal that represents the Ethernet start-of-stream delimiter of the Ethernet frame is encoded to obtain a second code block, where the second code block includes a /J/ code and a /K/ code. A signal that represents the Ethernet end-of-stream delimiter of the Ethernet frame is encoded to obtain a third code block, where the third code block includes a /T/ code and an /R/ code. A signal that represents the part of the Ethernet frame other than the Ethernet start-of-stream delimiter and the Ethernet end-of-stream delimiter is encoded to obtain multiple first code blocks. For example, if a quantity of bits included in the Ethernet frame is not an integer multiple of a byte, a first part of a last first code block of the multiple first code blocks is obtained by encoding the first control bit group of the first control signal. In addition, as shown in FIG. 21, the first part of the first code block further includes the second data bit group of the first data signal.

In a possible implementation, consecutive /J/ and /K/ codes are used for representing an SSD, so that identifying content of the first code block as the /J/ code or the /K/ code can be avoided. The consecutive /J/ and /K/ codes may be represented as a /J/K/ code. Consecutive /T/ and /R/ codes are used for representing an ESD, so that identifying the content of the first code block as the /R/ code can be avoided. The consecutive /T/ and /R/ codes may be represented as a /T/R/ code.

FIG. 22 is a diagram of misidentification according to an embodiment of this application. As shown in FIG. 22, if a /J/ code and a /K/ code are not consecutively used, content of a first code block may be identified as the /J/ code and the /K/ code. As a result, the first code block is considered as a second code block. Content of a former first code block may be identified as the /J/ code, and content of a latter first code block may be identified as the /K/ code. As a result, the content of the two first code blocks is considered as one second code block. If a /T/ code and an /R/ code are not consecutively used, the content of the first code block may be identified as the /T/ code and the /R/ code. As a result, the first code block is identified as a third code block. The foregoing three cases all cause misidentification of the first code block. In other words, the bit of the management signal is mistaken as the bit of the first control signal. Therefore, in this embodiment of this application, the /J/ code and the /K/ code need to be consecutively used, and the /T/ code and the /R/ code need to be consecutively used, to avoid misidentifying the first code block as the second code block or the third code block. In this case, a code block including consecutive /J/ and /K/ codes is the second code block, and a code block including consecutive /T/ and /R/ codes is the third code block.

For example, the second code block includes 1100010001, where 11000 represents the /J/ code, 10001 represents the /K/ code, and the second code block is used for representing an SSD. The third code block includes 0110100111, where 01101 represents the /T/ code, 00111 represents the /R/ code, and the third code block is used for representing an ESD. The content included in the first code block may be shown in Table 1. The first code block includes a first sub-block and a second sub-block, where the first sub-block includes 5 bits obtained through encoding in the first part, and the second sub-block includes the second part and 4 unencoded bits in the first part. A value of a position represented by O may be 1, and a value of a position represented by x may be 0 or 1.

**Table 1**

| Name of a first code block | First sub-block | Second sub-block | Note |
|---|---|---|---|
| 0 | 11110 | Oxxxx | Code block of a data type, where the first sub-block represents a value 0 |
| 1 | 01001 | Oxxxx | Code block of a data type, where the first sub-block represents a value 1 |
| 2 | 10100 | Oxxxx | Code block of a data type, where the first sub-block represents a value 2 |
| 3 | 10101 | Oxxxx | Code block of a data type, where the first sub-block represents a value 3 |
| 4 | 01010 | Oxxxx | Code block of a data type, where the first sub-block represents a value 4 |
| 5 | 01011 | Oxxxx | Code block of a data type, where the first sub-block represents a value 5 |
| 6 | 01110 | Oxxxx | Code block of a data type, where the first sub-block represents a value 6 |
| 7 | 01111 | Oxxxx | Code block of a data type, where the first sub-block represents a value 7 |
| 8 | 10010 | Oxxxx | Code block of a data type, where the first sub-block represents a value 8 |
| 9 | 10011 | Oxxxx | Code block of a data type, where the first sub-block represents a value 9 |
| A | 10110 | Oxxxx | Code block of a data type, where the first sub-block represents a value A |
| B | 10111 | Oxxxx | Code block of a data type, where the first sub-block represents a value B |
| C | 11010 | Oxxxx | Code block of a data type, where the first sub-block represents a value C |
| D | 11011 | Oxxxx | Code block of a data type, where the first sub-block represents a value D |
| E | 11100 | Oxxxx | Code block of a data type, where the first sub-block represents a value E |
| F | 11101 | Oxxxx | Code block of a data type, where the first sub-block represents a value F |
| I code | 11111 | O1111 | Code block of a control type, where the first sub-block represents idle (idle) |
| P code | 00000 | O1111 | Code block of a control type, where the first sub-block represents sleep (sleep) |
| R code | 00111 | Ox1xx | Code block of a control type, where the first sub-block represents reset (reset) |
| H code | 00100 | Ox1xx | Code block of a control type, where the first sub-block represents error (error) |
| S code | 11001 | Oxxxx | Code block of a control type, where the first sub-block represents set (set) |
| N code | 00101 | Oxxxx | Code block of a control type, where the first sub-block represents nibble data (nibble data) |

In some embodiments, if last 5 bits of the R code are any Oxxxx pattern other than Ox1xx, the first code block is a code block of a control type and represents reset extend (reset extend). If last 5 bits of the H code are O ERR 1 CRS COL, the first code block is a code block of a control type and represents a physical layer channel state indication. In this case, the first code block may be referred to as an H.sig code. If last 5 bits of the S code are O1110, the first code block is a code block of a control type and represents a PHY-level collision avoidance (PHY-level collision avoidance, PLCA) BEACON (a signal type). If last 5 bits of the S code are O1101, the first code block is a code block of a control type and represents a PLCA COMMIT (a signal type). If last 5 bits of the S code are any Oxxxx pattern other than O1110 and O1101, the first code block is a code block of a control type and represents set extend (set extend). If a first code block is another case other than the cases shown in Table 1, the first code block is a code block of a control type and represents reserved (reserved). For example, the first code block representing reserved is used to extend a new Ethernet function. This is not limited in this embodiment of this application.

S802: Send the multiple code blocks through one serial channel.

The serial channel may be referred to as a first serial channel. In a possible implementation, the serial channel is used to connect a MAC layer to a PHY. For example, the serial channel is used to connect a reconciliation sublayer (reconciliation sublayer, RS) to a physical coding sublayer (physical coding sublayer, PCS). For another example, the serial channel is used to connect the RS to a physical layer signaling (physical layer signaling, PLS) sublayer. For example, the serial channel is used to implement data transmission between the MAC sublayer and the PHY, or implement data transmission between an STA and the PHY. The serial channel may also be referred to as a serial channel implemented based on an MII. For example, the serial channel is implemented by using one pin (pin) or by using a group of pins. Therefore, if the serial channel is implemented by using one pin, the pin is used to send multiple code blocks. If the serial channel is implemented by using multiple pins, differential signals to be transmitted by using the multiple pins may be first obtained based on multiple code blocks, and then transmission of the differential signals is performed by using the multiple pins, so that the multiple code blocks are sent through one serial channel. Therefore, the multiple code blocks are sent through one serial channel, so that only a small quantity of pins need to be disposed to implement the serial channel, and then transmission of a data signal, a control signal, and a management signal is implemented through the serial channel.

FIG. 23 is a diagram of a transmission process of multiple code blocks according to an embodiment of this application. The method may be applied to the MAC functional module or the PHY functional module. If the method is applied to the MAC functional module, in the method, multiple code blocks may be transmitted to the PHY functional module through a serial channel. The transmission process may correspond to TX serial transmission shown in FIG. 23. If the method is applied to the PHY functional module, in the method, multiple code blocks may be transmitted to the MAC functional module through a serial channel. The transmission process may correspond to RX serial transmission shown in FIG. 23.

In this embodiment of this application, when the multiple code blocks are transmitted through a serial channel, the multiple obtained code blocks may be directly transmitted, or processing is first performed on the multiple code blocks, and then multiple code blocks obtained after processing are transmitted. The processing performed on the multiple code blocks includes at least one of encoding or scrambling, where the encoding includes non-return-to-zero-invert (non-return-to-zero-invert, NRZI) encoding or non-return-to-zero (non-return-to-zero, NRZ) encoding.

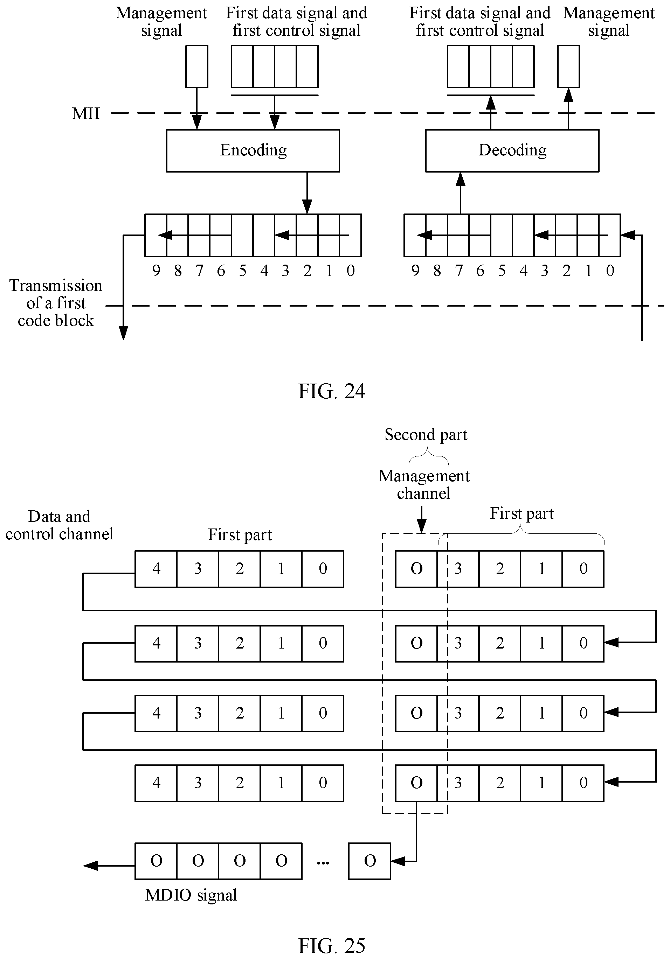

FIG. 24 is a diagram of a transmission process of a first code block according to an embodiment of this application. As shown in FIG. 24, to-be-transmitted signals include a management signal, a first data signal, and a first control signal to be transmitted in parallel through an MII. The to-be-transmitted signal is encoded to obtain the first code block. A first part of the first code block is obtained by encoding at least one of 4 first bits of the first data signal or 4 first bits of the first control signal. The first part further includes 4 second bits of the first data signal or 4 second bits of the first control signal. A second part includes 1 bit of the management signal. The first code block includes 10 bits. After the first code block is obtained, the first code block is serially transmitted through the MII. In addition, as shown in FIG. 24, when the first code block is transmitted, multiple bits of the first code block may be transmitted in descending order of bit positions. In some embodiments, the multiple bits of the first code block may alternatively be transmitted in ascending order of bit positions.

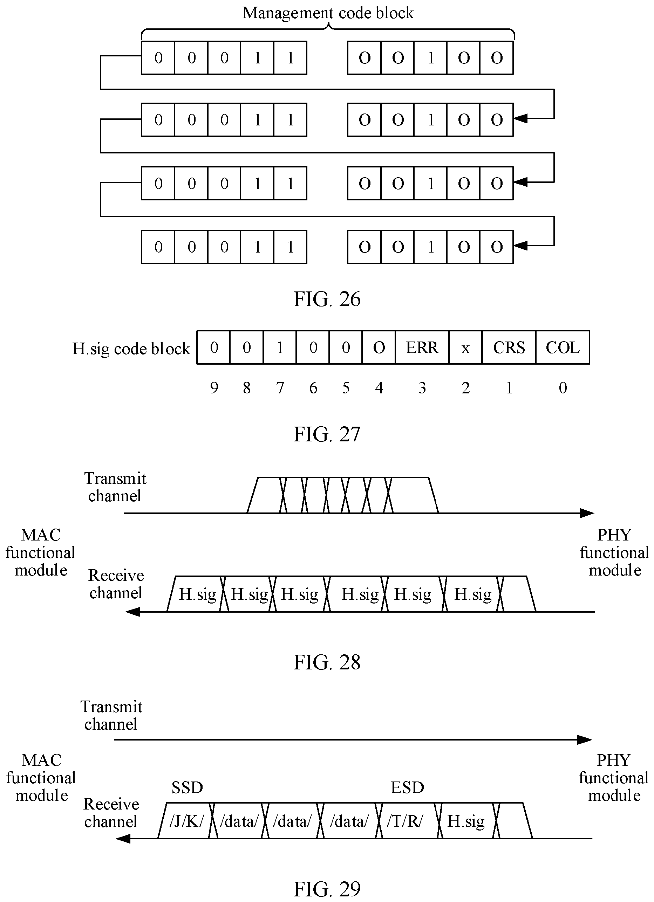

FIG. 25 is a diagram of another transmission process of a first code block according to an embodiment of this application. As shown in FIG. 25, bit positions corresponding to first parts of multiple first code blocks are used as a data and control channel, and bit positions corresponding to second parts of the multiple first code blocks are used as a management channel. As shown in FIG. 25, bits of a management signal included in the multiple second parts can be used to form an MDIO signal. FIG. 26 is a diagram of a transmission process of a management code block according to an embodiment of this application. As shown in FIG. 26, when no transmission of a data signal is needed, that is, a data channel is idle, a management code block is obtained through encoding, where the management code block can include multiple bits of a management signal. Refer to FIG. 26. Each management code block includes 4 bits of the management signal, and the 4 bits of the management signal are represented by "O". In this case, transmission efficiency of the management signal is high in comparison with a case in which the second part of the first code block includes only 1 bit of the management signal.

FIG. 27 is a diagram of another code block according to an embodiment of this application. For example, when a code block includes a physical layer state indication, the code block may be shown in FIG. 27. The code block may be referred to as an H.sig code block, and x shown in FIG. 27 may be 0 or 1. FIG. 28 is a diagram of a transmission process of an H.sig code block according to an embodiment of this application. As shown in FIG. 28, when the method is applied to the PHY functional module and multiple code blocks are transmitted to the MAC functional module, if the MAC functional module is in a sending mode, that is, the MAC functional module sends a code block to the PHY functional module, the PHY functional module may transmit the H.sig code block to the MAC functional module through a receive channel of the MAC functional module. A transmit channel of the MAC functional module may be a channel that is established based on the MII and used by the MAC functional module to transmit a code block to the PHY functional module. The receive channel of the MAC functional module may be a channel that is established based on the MII and used by the MAC functional module to receive a code block transmitted by the PHY functional module.

If the method is applied to the PHY functional module and multiple code blocks are transmitted to the MAC functional module, if the MAC functional module is in a receiving mode, that is, the MAC functional module receives a code block sent by the PHY functional module, the PHY functional module may transmit an H.sig code block to the MAC functional module through the receive channel of the MAC functional module.

FIG. 29 is a diagram of another transmission process of an H.sig code block according to an embodiment of this application. As shown in FIG. 29, the MAC functional module receives data through a receive channel, where the data is obtained based on an Ethernet frame. For example, the data obtained based on the Ethernet frame includes /data/ shown in FIG. 29. As shown in FIG. 29, the PHY functional module further transmits, to the MAC functional module, a /J/K/ code used for representing an SSD and a /T/R/ code used for representing an ESD. When the data is normal, the MAC functional module can obtain a physical layer state indication based on the received Ethernet frame. The MAC functional module may further receive, through the receive channel, an H.sig code block sent by the PHY functional module, where the H.sig code block includes a physical layer state indication, and the physical layer state indication included in the H.sig code block may indicate virtual CRS occupation.

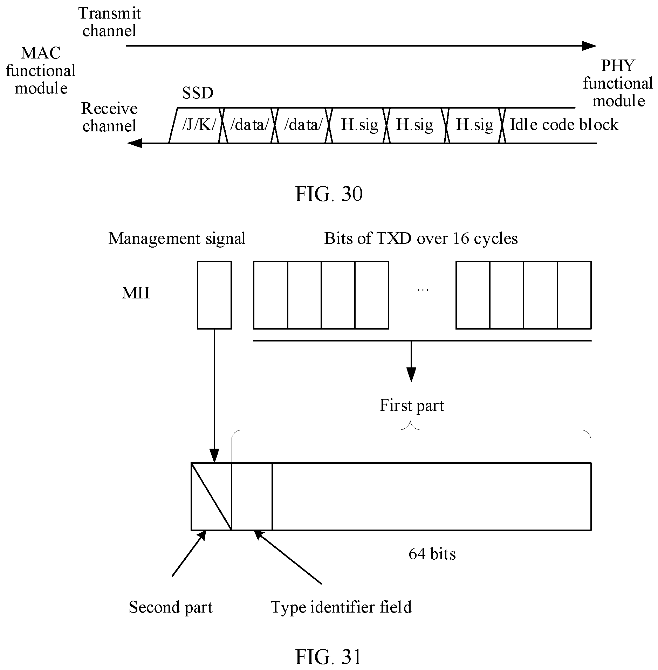

When the method is applied to the PHY functional module and a code block is transmitted to the MAC functional module, if the MAC functional module is in a receiving mode, and data sent by the PHY functional module to the MAC functional module is abnormal, the H.sig code block can be used to replace the abnormal data for transmission. FIG. 30 is a diagram of still another transmission process of an H.sig code block according to an embodiment of this application. As shown in FIG. 30, the MAC functional module receives data through a receive channel, where the data is obtained based on an Ethernet frame. For example, the data obtained based on the Ethernet frame includes /data/ shown in FIG. 30. As shown in FIG. 30, the PHY functional module further transmits, to the MAC functional module, a /J/K/ code used for representing an SSD. The MAC functional module further receives an H.sig code block through a receive channel, where the H.sig code block includes a physical layer state indication, and the H.sig code block is obtained as a replacement for abnormal data. As shown in FIG. 30, the PHY functional module may further transmit an idle code block to the MAC functional module, where the idle code block is a first code block representing idle. For example, in FIG. 28 to FIG. 30, the transmission process of the H.sig code block by the PHY functional module is implemented in a half-duplex scenario.

The foregoing uses an example in which the first part of the first code block is obtained through the 4B/5B encoding scheme for description. The following uses an example in which the first part of the first code block is obtained through 64B/65B encoding for description.

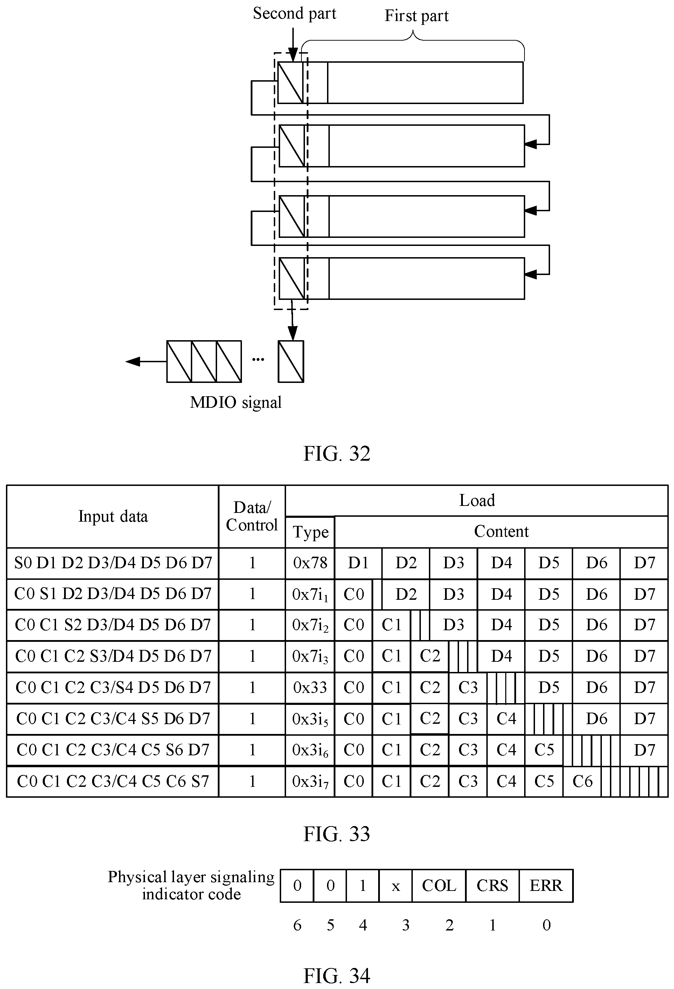

FIG. 31 is a diagram of another first code block according to an embodiment of this application. Refer to FIG. 31. Because a bit width of TXD of an MII is 4 bits, a first part of a first code block needs to be obtained by encoding bits of TXD over 16 cycles, and a second part of the first code block includes 1 bit of a management signal. FIG. 32 is a diagram of another transmission process of multiple first code blocks according to an embodiment of this application. As shown in FIG. 32, transmission of a management signal can be performed through transmission of second parts of multiple first code blocks, where the management signal includes an MDIO signal.

For example, in 64B/65B encoding in the IEEE 802.3 standard, a frame start position of an Ethernet frame is indicated by an /S/ code, where the /S/ code can be located only in a first byte and a fifth byte in a 64-bit block. In the method provided in this embodiment of this application, transmission of the Ethernet frame is performed through the MII. If the first part of the first code block is obtained through 64B/65B encoding, the frame start position needs to be capable of being located at any byte in 64 bits of the first part. Therefore, a code table that can indicate the /S/ code being located in any byte needs to be added to an encoding table in the IEEE 802.3 standard. Because the 64B/65B encoding table in the IEEE 802.3 standard already includes code tables for S0 and S4, in the method provided in this embodiment of this application, a code table indicating S1, S2, and S3 may be obtained through extension based on S0, and a code table indicating S5, S6, and S7 may be obtained through extension based on S4. FIG. 33 is a diagram of a newly added code table according to an embodiment of this application. As shown in FIG. 33, a type (type) of an S0 code is 0x78, and a value of the type may be set to 0x7i₁, 0x7ᵢ₂, and 0x7i₃, which respectively indicate S1, S2, and S3, by modifying a value of a second hexadecimal digit in a form of 0x7i, where i is a variable value. A type of an S4 code is 0x33, and a type value may be set to 0x3i₅, 0x3i₆, and 0x3i₇, which respectively indicate S5, S6, and S7, by modifying a value of a second hexadecimal digit in a form of 0x3i, where i is a variable value. i₁ to i₇ all represent values of i. For other parts that are not described in FIG. 33, refer to the 64B/65B encoding table in the IEEE 802.3 standard. Details are not described herein again.

For example, a bit width of a control code /C/ in 64B/65B encoding in the IEEE 802.3 standard is 7 bits. In the method provided in this embodiment of this application, a first code block representing nibble data, a first code block representing a physical layer channel state indication, and the like may be obtained through extension based on the control code in the IEEE 802.3 standard. The first code block representing the nibble data may be referred to as a nibble representation code, and the first code block representing the physical layer channel state indication may be referred to as a physical layer signaling indicator code. Table 2 is a control code table for 64B/65B encoding in the IEEE 802.3 standard. A nibble representation code may be obtained through extension based on a reserved code in the control code table. As shown in Table 2, reserved codes includes a reserved code 0 to a reserved code 5. An example in which the nibble representation code is obtained based on the reserved code 5 is used. The nibble representation code may be 0x7h, where 0x7 represents a control code pattern, and the h part is 4 bits, representing nibble data. A physical layer signaling indicator code may be obtained through extension based on an error code 0x1E in Table 2. For example, the physical layer signaling indicator code is 0x1u, where 0x1 represents a control code pattern, and the u part is 4 bits, representing a physical layer channel state indication. A physical layer representation code may alternatively be obtained through extension based on a reserved code in Table 2. Details are not described herein again.

**Table 2**

| Name | Symbol | Control code |
|---|---|---|
| Idle (idle) | /I/ | 0x00 |
| Low power idle (low power idle, LPI) | /LI/ | 0x06 |
| Start (start) | /S/ | Encoding by a block type field |
| Terminate (terminate) | /T/ | Encoding by a block type field |
| Error (error) | /E/ | 0x1E |
| Reserved code (reserved) 0 | - | 0x2D |
| Reserved code 1 | - | 0x33 |
| Reserved code 2 | - | 0x4B |
| Reserved code 3 | - | 0x55 |
| Reserved code 4 | - | 0x66 |
| Reserved code 5 | - | 0x78 |

FIG. 34 is a diagram of a physical layer signaling indicator code according to an embodiment of this application. Refer to FIG. 34. A value of x may be 0 or 1. For example, refer to FIG. 34. When a bit being 0 indicates validity and a bit being 1 indicates invalidity, if both COL and CRS are invalid and x is 1, a physical layer channel indicator code is the same as an original error code.

In a possible implementation, the management signal includes a first MDIO signal corresponding to a read operation. The method further includes: receiving a second MDIO signal, where the second MDIO signal is used to perform feedback for the read operation. For example, a serial channel for receiving the second MDIO signal is different from the serial channel for sending the multiple code blocks. In other words, transmission of the first MDIO signal corresponding to the read operation and the second MDIO signal corresponding to a read feedback operation is performed through two serial channels. For example, the serial channel for transmission of the second MDIO signal is further used to connect the MAC layer to the PHY, and the serial channel may be implemented by using one pin or by using a group of pins. The serial channel for receiving the second MDIO signal may be referred to as a second serial channel. The second MDIO signal may be encoded as a code block, and then transmission of the second MDIO signal is performed through transmission of the code block. For example, the method is applied to the MAC functional module, the MAC functional module receives a code block transmitted by the PHY functional module, and the code block includes a second MDIO signal. For another example, the method is applied to the PHY functional module, the PHY functional module receives a code block transmitted by the MAC functional module, and the code block includes a second MDIO signal. A principle of a manner of obtaining, through encoding, a code block including the second MDIO signal is the same as a principle of a manner of obtaining, through encoding, a code block including the first MDIO signal. Details are not described herein again.

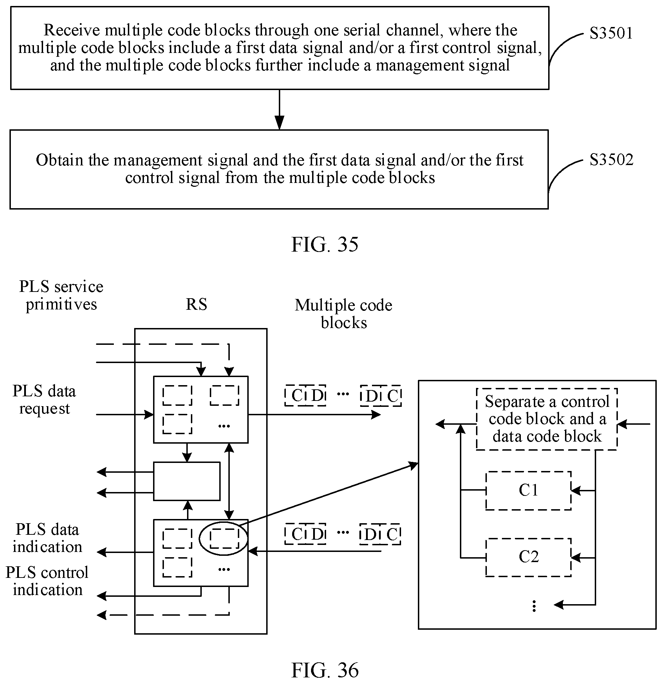

The foregoing describes the information processing method provided in this embodiment of this application from a perspective of encoding. The following describes the method from a perspective of decoding. The method may be shown in FIG. 35. The method may be applied to the MAC functional module or the PHY functional module shown in FIG. 7, and the MAC functional module and the PHY functional module may be located in a same chip or different chips. As shown in FIG. 35, the method includes but is not limited to S3501 and S3502.

S3501: Receive multiple code blocks through one serial channel, where the multiple code blocks include a first data signal and/or a first control signal, and the multiple code blocks further include a management signal.

In a possible implementation, the serial channel is used to connect a MAC layer to a PHY, and the serial channel may be referred to as a channel implemented based on an MII. For example, the serial channel is implemented by using one pin or by using a group of pins. Therefore, if the serial channel is implemented by using one pin, the pin is used to receive multiple code blocks. If the serial channel is implemented by using multiple pins, differential signals obtained based on multiple code blocks may be received by using the multiple pins, and the multiple code blocks are obtained based on the differential signals. Therefore, the multiple code blocks are received through one serial channel, so that only a small quantity of pins need to be disposed to implement the serial channel, and then transmission of a data signal, a control signal, and a management signal is implemented through the serial channel. For content related to encoding of the multiple code blocks, refer to content in an encoding method. Details are not described herein again.

S3502: Obtain the management signal and the first data signal and/or the first control signal from the multiple code blocks.

For example, still refer to FIG. 24. After multiple first code blocks are received through the MII, the multiple first code blocks are decoded to obtain the to-be-transmitted signals, namely the management signal and the first data signal and/or the first control signal. Each first code block includes 10 bits. For example, if a first code block of the multiple code blocks includes a first part and a second part, the first part includes the first data signal and/or the first control signal, and the second part includes the management signal, obtaining the management signal and the first data signal and/or the first control signal from the multiple code blocks includes: obtaining the first data signal and/or the first control signal from the first part of the first code block; and obtaining the management signal from the second part of the first code block. For example, when the first part includes at least one code block obtained by encoding a first data bit group of the first data signal and/or a first control bit group of the first control signal, at least one first code block is decoded according to an encoding scheme of the at least one code block, to obtain the first data bit group of the first data signal and/or the first control bit group of the first control signal. If the first part further includes a second data bit group of the first data signal and/or a second control bit group of the first control signal, the second data bit group of the first data signal or the second control bit group or both are obtained from the first part. Bits of the management signal are obtained from the second part of the first code block.

For example, if there are multiple first code blocks, and the second part periodically appears in the multiple first code blocks, obtaining the management signal from the second part of the first code block includes: obtaining, from the multiple first code blocks, the second part that periodically appears; and obtaining the management signal from the second part. For example, the multiple code blocks include a management code block, and the management code block includes the management signal. Obtaining the management signal from the multiple code blocks includes: obtaining the management signal from the management code block. For example, the management signal is obtained from the management code block in a manner of obtaining the management code block based on the management signal. The management code block shown in FIG. 16 is used as an example. The bits of the management signal are obtained from a position represented by "O" in the management code block.

In a possible implementation, the method is applied to the MAC functional module, and the multiple code blocks further include a physical layer channel state indication. Therefore, the method further includes: obtaining the physical layer channel state indication from the multiple code blocks. For example, in a manner of obtaining, based on the physical layer channel state indication, a code block including the physical layer channel state indication, the physical layer channel state indication is obtained from the code block. The code block shown in FIG. 17 is used as an example. The physical layer channel state indication is obtained from positions represented by "COL" and "CRS".

In a possible implementation, the management signal includes a first MDIO signal corresponding to a read operation. The method further includes: sending a second MDIO signal, where the second MDIO signal is used to perform feedback for the read operation. For example, a serial channel for sending the second MDIO signal is different from the serial channel for receiving the multiple code blocks. A principle of a manner of sending the second MDIO signal is the same as a principle of a manner of sending the first MDIO signal. For details, refer to related content of the first MDIO signal in S801 and S802. Details are not described herein again.

For example, if the multiple code blocks further include a second code block, a second control signal is obtained based on the second code block, where the second control signal is used to obtain an Ethernet start-of-stream delimiter of an Ethernet frame. For example, if the multiple code blocks further include a third code block, a third control signal is obtained based on the third code block, where the third control signal is used to obtain an Ethernet end-of-stream delimiter of an Ethernet frame.

In some embodiments, if the method is applied to the PHY functional module, obtaining the management signal and the first data signal and/or the first control signal from the multiple code blocks includes: inputting the multiple code blocks into a reconciliation sublayer (RS), and obtaining, at the RS, the management signal and the first data signal and/or the first control signal from the multiple code blocks. In the method, the management signal and the first data signal and/or the first control signal are obtained from the multiple code blocks at the RS, so that the management signal and the first data signal and/or the first control signal can be directly converted, at the RS, into signals processable at a PLS, without a need to first convert the management signal and the first data signal and/or the first control signal into parallel signals to be transmitted through the MII in the IEEE 802.3 standard, and then convert the parallel signals into signals processable at the PLS. Therefore, efficiency of obtaining the signal processable at the PLS is high.

FIG. 36 is a diagram of a process of inputting multiple code blocks into an RS according to an embodiment of this application. As shown in FIG. 36, the multiple code blocks received through a serial channel enter an RS, and a management signal and a first data signal and/or a first control signal are obtained from the multiple code blocks at the RS. The management signal and the first data signal and/or the first control signal are further converted, at the RS, into signals processable at a PLS. For example, the signals processable at the PLS include PLS service primitives (PLS service primitives) shown in FIG. 36. The multiple code blocks include a code block of a control type and a code block of a data type, and a type of a code block is determined based on content of the code block obtained through encoding. The code block of the control type may be referred to as a control code block, and a code block represented by C shown in FIG. 36 may be a control code block. The code block of the data type may be referred to as a data code block, and a code block represented by D shown in FIG. 36 may be a data code block.

As shown in FIG. 36, the control code block and the data code block may be separated at the RS, and operations are performed on the separated data code block and control code block. The performed operations are shown by C1 and C2 in FIG. 36. A type of the operation is not limited in this embodiment of this application. The PLS service primitives include but are not limited to a PLS control request (PLS control request), a PLS data request (PLS data request), a PLS signal indication (PLS signal indication), a PLS carrier indication (PLS carrier indication), a PLS data indication (PLS data indication), and a PLS control indication (PLS control indication) shown in FIG. 36.

In a possible implementation, after the multiple code blocks are received, boundaries of the multiple code blocks need to be identified to implement synchronization of the multiple code blocks. The synchronization of the multiple code blocks includes but is not limited to synchronization of a management channel and synchronization of a data channel. The synchronization of the management channel can ensure exchange of management signals, and the synchronization of the data channel can ensure exchange of data signals and control signals.

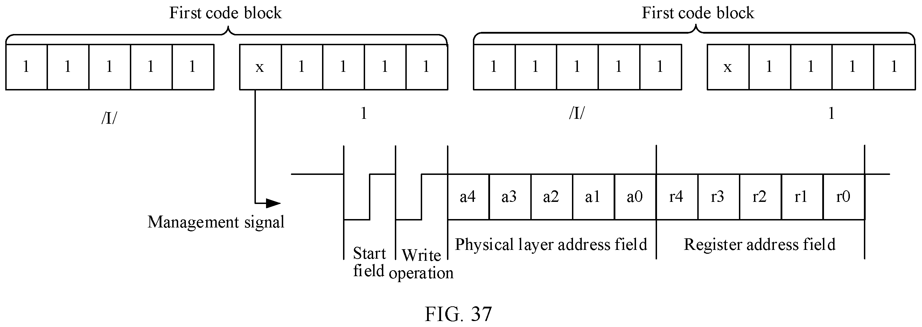

FIG. 37 is a diagram of a process of synchronization of a management channel according to an embodiment of this application. Refer to FIG. 37. When a first part of a first code block is obtained based on a first control bit group and a second control bit group of a first control signal, the first part of the first code block includes an /I/ code and the second control bit group, where the /I/ code is an idle code, and the /I/ code may be uniquely identified. When a management signal does not include an MDIO signal, a value of a bit of the management signal is 1. When the management signal includes an MDIO signal and transmission of the MDIO signal starts, a "101" transition occurs in multiple bits of the management signal, where the transition can indicate a start (start) field. Therefore, the synchronization of the management channel can be implemented by identifying the start field. For other content of the management signal shown in FIG. 37, refer to related descriptions in FIG. 9 and FIG. 10. Details are not described herein again. In addition, a0 to a4 shown in FIG. 37 are merely used as an example of a value of a physical layer address field, and r0 to r4 are merely used as an example of a value of a register address field. a0 to a4 and r0 to r4 are not used to limit values of the two fields.

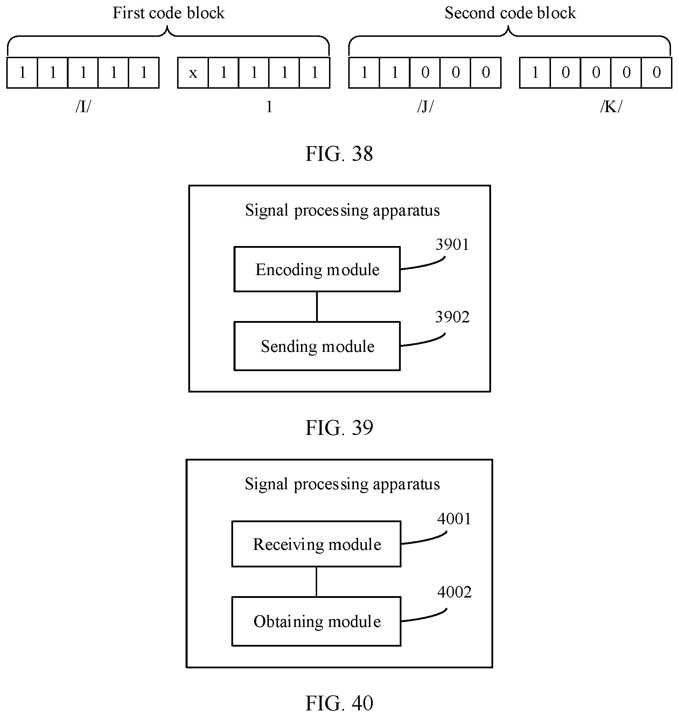

In a possible implementation, synchronization of a data channel is implemented by identifying an SSD of an Ethernet frame. In other words, it may be determined, by identifying consecutive /J/ and /K/ codes, that transmission of the Ethernet frame starts, thereby implementing the synchronization of the data channel. FIG. 38 is a diagram of a process of synchronization of a data channel according to an embodiment of this application. As shown in FIG. 38, a first code block is first identified, where the first code block is a code block of a control type and represents idle. For example, the first code block shown in FIG. 38 is 11111 x1111, and x shown in FIG. 38 may represent 0 or 1. Then, a second code block is identified, where the second code block includes a /J/ code and a /K/ code. Therefore, after the second code block is identified, it can be determined that transmission of an Ethernet frame starts, thereby implementing the synchronization of the data channel. In a possible implementation, when the synchronization of the data channel is implemented, a position of a bit of a management channel in the first code block is fixed. Therefore, the position of the bit of the management channel may be directly determined when the synchronization of the data channel is implemented. In this way, synchronization of the management channel can be implemented by identifying a start field of a management signal.

In the signal processing method provided in this embodiment of this application, the multiple code blocks include the management signal and the first data signal and/or the first control signal. Therefore, the multiple code blocks can include content of a large quantity of types of signals. When transmission of the multiple code blocks is performed through one serial channel, only a small quantity of pins need to be disposed to implement the serial channel, and then transmission of the data signal, the control signal, and the management signal is implemented through the serial channel.

An embodiment of this application further provides a signal processing apparatus. FIG. 39 is a diagram of a structure of a signal processing apparatus according to an embodiment of this application. The apparatus is used for a MAC functional module or a PHY functional module. Based on multiple modules shown in FIG. 39, the apparatus can perform all or some operations in the signal processing method shown in FIG. 7. It should be understood that the apparatus may include more additional modules than the shown modules or omit some of the shown modules. This is not limited in this embodiment of this application. As shown in FIG. 39, the apparatus includes an encoding module 3901 and a sending module 3902.

The encoding module 3901 is configured to encode a to-be-transmitted signal to obtain multiple code blocks, where the multiple code blocks include a first data signal and/or a first control signal, and the multiple code blocks further include a management signal. The sending module 3902 is configured to send the multiple code blocks through one serial channel. The serial channel may be referred to as a first serial channel.

In some embodiments, a first code block of the multiple code blocks includes a first part and a second part, the first part includes the first data signal and/or the first control signal, and the second part includes the management signal.

In some embodiments, there are multiple first code blocks, and the management signal periodically appears in the multiple first code blocks.

In some embodiments, the multiple code blocks include a management code block, where the management code block includes a management signal.

In some embodiments, the serial channel is used to connect a MAC layer to a PHY.

In some embodiments, the serial channel is implemented by using one pin or by using a group of pins.

In some embodiments, the serial channel is implemented based on an MII.

In some embodiments, the to-be-transmitted signal is related to an Ethernet frame.

In some embodiments, that the to-be-transmitted signal is related to the Ethernet frame includes at least one of the following: The to-be-transmitted signal is generated based on the Ethernet frame, or the to-be-transmitted signal is used to manage transmission of the Ethernet frame.

In some embodiments, the management signal includes a first MDIO signal corresponding to a read operation. The apparatus further includes: a receiving module, configured to receive a second MDIO signal, where the second MDIO signal is used to perform feedback for the read operation.

In some embodiments, a serial channel for receiving the second MDIO signal is different from the serial channel for sending the multiple code blocks. The serial channel for receiving the second MDIO signal may be referred to as a second serial channel.

In some embodiments, if the apparatus is used for the PHY functional module, the multiple code blocks further include a physical layer channel state indication.

In the apparatus provided in this embodiment of this application, the multiple code blocks include the management signal and the first data signal and/or the first control signal. Therefore, the multiple code blocks can include content of a large quantity of types of signals. When transmission of the multiple code blocks is performed through one serial channel, only a small quantity of pins need to be disposed to implement the serial channel, and then transmission of the data signal, the control signal, and the management signal is implemented through the serial channel.

An embodiment of this application further provides another signal processing apparatus. FIG. 40 is a diagram of a structure of another signal processing apparatus according to an embodiment of this application. The apparatus is used for a MAC functional module or a PHY functional module. Based on multiple modules shown in FIG. 40, the apparatus can perform all or some operations in the signal processing method shown in FIG. 35. It should be understood that the apparatus may include more additional modules than the shown modules or omit some of the shown modules. This is not limited in this embodiment of this application. As shown in FIG. 40, the apparatus includes a receiving module 4001 and an obtaining module 4002.

The receiving module 4001 is configured to receive multiple code blocks through one serial channel, where the multiple code blocks include a first data signal and/or a first control signal, and the multiple code blocks further include a management signal. The obtaining module 4002 is configured to obtain the management signal and the first data signal and/or the first control signal from the multiple code blocks. The serial channel may be referred to as a first serial channel.

In some embodiments, a first code block in the multiple code blocks includes a first part and a second part, the first part includes the first data signal and/or the first control signal, and the second part includes the management signal. The obtaining module 4002 is configured to obtain the first data signal and/or the first control signal from the first part of the first code block, and obtain the management signal from the second part of the first code block.

In some embodiments, there are multiple first code blocks, and the second part periodically appears in the multiple first code blocks. The obtaining module 4002 is configured to obtain, from the multiple first code blocks, the second part that periodically appears, and obtain the management signal from the second part.

In some embodiments, the multiple code blocks include a management code block, and the management code block includes the management signal. The obtaining module 4002 is configured to obtain the management signal from the management code block.

In some embodiments, the serial channel is used to connect a MAC layer to a PHY.

In some embodiments, the serial channel is implemented by using one pin or by using a group of pins.

In some embodiments, the serial channel is implemented based on an MII.

In some embodiments, the management signal includes a first MDIO signal corresponding to a read operation. The apparatus further includes: a sending module, configured to send a second MDIO signal, where the second MDIO signal is used to perform feedback for the read operation.

In some embodiments, a serial channel for sending the second MDIO signal is different from the serial channel for receiving the multiple code blocks. The serial channel for receiving the second MDIO signal may be referred to as a second serial channel.

In some embodiments, if the apparatus is used for the MAC functional module, the multiple code blocks further include a physical layer channel state indication. The obtaining module 4002 is further configured to obtain the physical layer channel state indication from the multiple code blocks.

In the apparatus provided in this embodiment of this application, the multiple code blocks include the management signal and the first data signal and/or the first control signal. Therefore, the multiple code blocks can include content of a large quantity of types of signals. When transmission of the multiple code blocks is performed through one serial channel, only a small quantity of pins need to be disposed to implement the serial channel, and then transmission of the data signal, the control signal, and the management signal is implemented through the serial channel.

It should be understood that, when the apparatus provided in FIG. 39 and FIG. 40 implements functions of the apparatus, division into the foregoing functional modules is merely used as an example for description. During actual application, the foregoing functions may be allocated to different functional modules for implementation based on a requirement. In other words, a device is divided into different functional modules in terms of an inner structure, to implement all or some of the functions described above. In addition, the apparatuses provided in the foregoing embodiments and the method embodiments pertain to a same concept. For a specific implementation process of the apparatuses, refer to the method embodiments. Details are not described herein again.

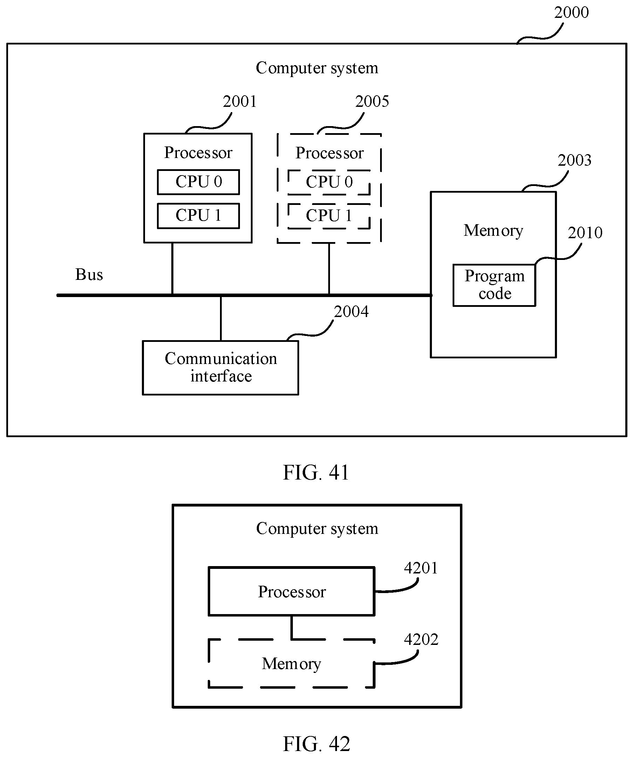

FIG. 41 is a diagram of a structure of a computer system according to an embodiment of this application. For example, as shown in FIG. 41, the computer system is a computer system 2000. The computer system 2000 may be a network device, a routing device, or a switching device. The computer system 2000 shown in FIG. 41 is configured to perform operations in the signal processing method shown in FIG. 8 or FIG. 35. The computer system 2000 is, for example, a server, and the computer system 2000 may be implemented by using a general bus architecture.

As shown in FIG. 41, the computer system 2000 includes at least one processor 2001, a memory 2003, and at least one communication interface 2004.

The processor 2001 is a central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the method provided in embodiments of this application. For example, the processor 2001 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor 2001 may implement or execute various logical blocks, modules, and circuits described with reference to content disclosed in embodiments of this application, or may be a combination implementing a computing function, for example, a combination of one or more microprocessors or a combination of a DSP and a microprocessor.

Optionally, the computer system 2000 further includes a bus. The bus is configured to perform transmission of information between the components of the computer system 2000. The bus may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, the bus is represented by using only one bold line in FIG. 41. However, it does not mean that there is only one bus or one type of bus.

The memory 2003 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 2003 exists independently, and is connected to the processor 2001 through the bus. Alternatively, the memory 2003 may be integrated with the processor 2001.

The communication interface 2004 is any apparatus such as a transceiver, and is configured to communicate with another device or a communication network. The communication network may be an Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a WLAN interface, a cellular network communication interface, or a combination thereof. The Ethernet interface may be an optical interface, an electrical interface, or a combination thereof. In this embodiment of this application, the communication interface 2004 may be used by the computer system 2000 to communicate with another device.

During specific implementation, in an embodiment, the processor 2001 may include one or more CPUs, for example, a CPU 0 and a CPU 1 shown in FIG. 41. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the computer system 2000 may include multiple processors, for example, the processor 2001 and the processor 2005 shown in FIG. 41. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the computer system 2000 may further include an output device and an input device. The output device communicates with the processor 2001, and may display information in multiple manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 2001, and may receive an input from a user in multiple manners. For example, the input device may be a mouse, a keyboard, a touchscreen device, or a sensing device.

In some embodiments, the memory 2003 is configured to store program code 2010, and the processor 2001 may execute the program code 2010 stored in the memory 2003. The program code 2010 may include one or more software modules. Optionally, the processor 2001 may also store program code or instructions.

In a specific embodiment, the computer system 2000 in this embodiment of this application may include the MAC functional module and/or the PHY functional module in the foregoing method embodiments. The MAC functional module and/or the PHY functional module may be implemented by using the processor 2001 in the computer system 2000.

The computer system 2000 may further correspond to the apparatuses shown in FIG. 39 and FIG. 40. Each functional module in the apparatus shown in FIG. 39 or FIG. 40 may be implemented by using a circuit in the processor 2000.

The steps of the signal processing methods shown in FIG. 8 and FIG. 35 are completed by using an integrated logic circuit of hardware in the processor of the computer system 2000. The steps of the methods disclosed with reference to embodiments of this application may be directly performed and completed by a hardware processor.

FIG. 42 is a diagram of a structure of another computer system according to an embodiment of this application. The computer system is configured to perform operations in the signal processing methods shown in FIG. 8 and FIG. 35. For example, the computer system is a server. The server may vary greatly due to different configurations or performance. The computer system may include one or more processors 4201. The one or more processors 4201 are configured to implement the MAC functional module and/or the PHY functional module in the method embodiments. As shown in FIG. 42, the computer system may further include one or more memories 4202. The one or more memories 4202 store at least one computer program, and the at least one computer program is loaded and executed by the one or more processors 4201. For example, the processor 4201 is a CPU. Certainly, the computer system may further include components such as a wired or wireless network interface, a keyboard, and an input/output interface, to perform input/output. The computer system may further include another component configured to implement a device function. Details are not described herein.

An embodiment of this application further provides a communication apparatus. The apparatus includes: a transceiver module, configured to perform a receiving and/or sending related operation in the signal processing method shown in FIG. 8; and a processing module, configured to perform another operation other than the receiving and/or sending related operation in the signal processing method shown in FIG. 8. An embodiment of this application further provides another communication apparatus. The apparatus includes: a transceiver module, configured to perform a receiving and/or sending related operation in the signal processing method shown in FIG. 35; and a processing module, configured to perform another operation other than the receiving and/or sending related operation in the signal processing method shown in FIG. 35. An embodiment of this application provides still another communication apparatus. The apparatus includes a MAC layer circuit, where the MAC layer circuit is configured to perform the signal processing method shown in FIG. 8 and/or FIG. 35. An embodiment of this application provides yet another communication apparatus. The apparatus includes a PHY circuit, where the PHY circuit is configured to perform the signal processing method shown in FIG. 8 and/or FIG. 35.

All the foregoing signal processing apparatuses and communication apparatuses may be chips or communication devices.

An embodiment of this application provides a chip. The chip includes a MAC layer circuit, where the MAC layer circuit is configured to perform the signal processing method shown in FIG. 8 and/or FIG. 35. An embodiment of this application further provides another chip. The chip includes a PHY circuit, where the PHY circuit is configured to perform the signal processing method shown in FIG. 8 and/or FIG. 35.

An embodiment of this application further provides a communication system. The communication system includes a MAC layer circuit and a PHY circuit. The MAC layer circuit is configured to perform the signal processing method shown in FIG. 8, and the PHY circuit is configured to perform the signal processing method shown in FIG. 35. Alternatively, the PHY circuit is configured to perform the signal processing method shown in FIG. 8, and the MAC layer circuit is configured to perform the signal processing method shown in FIG. 35. The communication system may be implemented by using a chip or a communication device.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computer machines (advanced RISC machines, ARM) architecture.

Further, in an optional embodiment, if one or more of the computer system, the communication apparatus, the chip, or the communication system further includes a memory, the memory may include a read-only memory and a random access memory, and provide instructions and data for the processor. The memory may further include a nonvolatile random access memory. For example, the memory may further store information of a device type.

The memory may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. As an example description rather than a limitative description, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When the software is used for the implementation, all or some of embodiments may be implemented in a form of a computer program or a computer program product. The computer program or the computer program product includes one or more computer instructions. When the computer program instructions are loaded and executed on a computer, the procedures or functions according to this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk drive, or a magnetic tape), an optical medium (for example, a digital video disc (digital video disc, DVD)), or a semiconductor medium (for example, a solid-state drive (solid-state drive, SSD)), or the like.

To clearly describe the interchangeability of hardware and software, the steps and composition of embodiments have been generally described in the foregoing descriptions in terms of functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

Computer program code used to implement the method in embodiments of this application may be written in one or more programming languages. The computer program code may be provided for a processor of a general-purpose computer, a dedicated computer, or another programmable apparatus for storing annotation content, so that when the program code is executed by the computer or the another programmable apparatus for storing annotation content, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In a context of embodiments of this application, the computer program code or related data may be carried on any appropriate carrier, so that a device, an apparatus, or a processor can perform various processing and operations described above. Examples of the carrier include a signal, a computer-readable medium, and the like. Examples of the signal may include propagating signals in electrical, optical, radio, sound, or other forms, such as carrier waves and infrared signals.

It may be clearly understood by a person skilled in the art that, for the purpose of convenient and brief description, for a detailed working process of the foregoing system, device, and module, refer to a corresponding process in the foregoing method embodiment. Details are not described herein.

In the several embodiments provided in this application, it should be understood that the disclosed system, device, and method may be implemented in other manners. For example, the described device embodiment is merely an example. For example, division into the modules is merely logical function division and may be other division during actual implementation. For example, multiple modules or components may be combined or integrated into another system, or some features may be ignored or not performed. In addition, the displayed or discussed mutual couplings or direct couplings or communication connections may be implemented through some interfaces. Indirect couplings or communication connections between the devices or modules may be electrical connections, mechanical connections, or connections in other forms.

The modules described as separate parts may or may not be physically separate, and parts displayed as modules may or may not be physical modules, may be located in one position, or may be distributed on multiple network modules. Some or all of the modules may be selected based on actual requirements to achieve the objectives of the solutions in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

In this application, the terms "first", "second", and the like are used to distinguish between same or similar items whose effects and functions are basically the same. It should be understood that there is no logical or time-sequence dependency between "first", "second", and "n^{th}", and a quantity and an execution sequence are not limited. It should be further understood that although terms such as "first" and "second" are used in the following descriptions to describe various elements, these elements should not be limited by the terms. These terms are merely used to distinguish one element from another element. For example, without departing from the scope of various examples, a first image may be referred to as a second image, and similarly, a second image may be referred to as a first image.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "multiple" means two or more. For example, multiple range locks mean two or more range locks. The terms "system" and "network" may be often used interchangeably in this specification.

It should be understood that the terms used in the descriptions of the various examples in this specification are merely intended to describe specific examples but are not intended to constitute a limitation. The terms "one" ("a" and "an") and "the" of singular forms used in the descriptions of various examples and the appended claims are also intended to include plural forms, unless otherwise specified in the context clearly.

It should be further understood that when being used in this specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, but B may alternatively be determined based on A and/or other information.

It should be further understood that "one embodiment", "an embodiment", or "a possible implementation" mentioned throughout this specification means that particular features, structures, or characteristics related to the embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. A signal processing method, comprising:
encoding a to-be-transmitted signal to obtain multiple code blocks, wherein the multiple code blocks comprise a first data signal and/or a first control signal, and the multiple code blocks further comprise a management signal; and
sending the multiple code blocks through one serial channel.

2. The method according to claim 1, wherein a first code block of the multiple code blocks comprises a first part and a second part, the first part comprises the first data signal and/or the first control signal, and the second part comprises the management signal.

3. The method according to claim 2, wherein there are multiple first code blocks, and the management signal periodically appears in the multiple first code blocks.

4. The method according to any one of claims 1 to 3, wherein the multiple code blocks comprise a management code block, and the management code block comprises the management signal.

5. The method according to any one of claims 1 to 4, wherein the serial channel is used to connect a media access control MAC layer to a physical layer PHY.

6. The method according to any one of claims 1 to 5, wherein the serial channel is implemented by using one pin or by using a group of pins.

7. The method according to any one of claims 1 to 6, wherein the serial channel is implemented based on a media independent interface MII.

8. The method according to any one of claims 1 to 7, wherein the to-be-transmitted signal is related to an Ethernet frame.

9. The method according to claim 8, wherein that the to-be-transmitted signal is related to the Ethernet frame comprises at least one of the following: the to-be-transmitted signal is generated based on the Ethernet frame, or the to-be-transmitted signal is used to manage transmission of the Ethernet frame.

10. The method according to any one of claims 1 to 9, wherein the management signal comprises a first management data input/output MDIO signal corresponding to a read operation, and the method further comprises:
receiving a second MDIO signal, wherein the second MDIO signal is used to perform feedback for the read operation.

11. The method according to claim 10, wherein a second serial channel for receiving the second MDIO signal is different from a first serial channel for sending the multiple code blocks.

12. The method according to any one of claims 1 to 11, wherein the method is applied to a physical layer PHY functional module, and the multiple code blocks further comprise a physical layer channel state indication.

13. A signal processing method, comprising:
receiving multiple code blocks through one serial channel, wherein the multiple code blocks comprise a first data signal and/or a first control signal, and the multiple code blocks further comprise a management signal; and
obtaining the management signal and the first data signal and/or the first control signal from the multiple code blocks.

14. The method according to claim 13, wherein a first code block of the multiple code blocks comprises a first part and a second part, the first part comprises the first data signal and/or the first control signal, and the second part comprises the management signal; and
the obtaining the management signal and the first data signal and/or the first control signal from the multiple code blocks comprises:
obtaining the first data signal and/or the first control signal from the first part of the first code block; and
obtaining the management signal from the second part of the first code block.

15. The method according to claim 14, wherein there are multiple first code blocks, and the second part periodically appears in multiple first code blocks; and the obtaining the management signal from the second part of the first code block comprises:
obtaining, from the multiple first code blocks, the second part that periodically appears; and
obtaining the management signal from the second part.

16. The method according to any one of claims 13 to 15, wherein the multiple code blocks comprise a management code block, and the management code block comprises the management signal; and the obtaining the management signal from the multiple code blocks comprises:
obtaining the management signal from the management code block.

17. The method according to any one of claims 13 to 16, wherein the serial channel is used to connect a media access control MAC layer to a physical layer PHY.

18. The method according to any one of claims 13 to 17, wherein the serial channel is implemented by using one pin or by using a group of pins.

19. The method according to any one of claims 13 to 18, wherein the serial channel is implemented based on a media independent interface MII.

20. The method according to any one of claims 13 to 19, wherein the management signal comprises a first management data input/output MDIO signal corresponding to a read operation, and the method further comprises:
sending a second MDIO signal, wherein the second MDIO signal is used to perform feedback for the read operation.

21. The method according to claim 20, wherein a second serial channel for sending the second MDIO signal is different from a first serial channel for receiving the multiple code blocks.

22. The method according to any one of claims 13 to 21, wherein the method is applied to a media access control MAC functional module, the multiple code blocks further comprise a physical layer channel state indication, and the method further comprises:
obtaining the physical layer channel state indication from the multiple code blocks.

23. A signal processing apparatus, comprising:
an encoding module, configured to encode a to-be-transmitted signal to obtain multiple code blocks, wherein the multiple code blocks comprise a first data signal and/or a first control signal, and the multiple code blocks further comprise a management signal; and
a sending module, configured to send the multiple code blocks through one serial channel.

24. The apparatus according to claim 23, wherein a first code block of the multiple code blocks comprises a first part and a second part, the first part comprises the first data signal and/or the first control signal, and the second part comprises the management signal.

25. The apparatus according to claim 24, wherein there are multiple first code blocks, and the management signal periodically appears in the multiple first code blocks.

26. The apparatus according to any one of claims 23 to 25, wherein the multiple code blocks comprise a management code block, and the management code block comprises the management signal.

27. The apparatus according to any one of claims 23 to 26, wherein the serial channel is used to connect a media access control MAC layer to a physical layer PHY.

28. The apparatus according to any one of claims 23 to 27, wherein the serial channel is implemented by using one pin or by using a group of pins.

29. The apparatus according to any one of claims 23 to 28, wherein the serial channel is implemented based on a media independent interface MII.

30. The apparatus according to any one of claims 23 to 29, wherein the to-be-transmitted signal is related to an Ethernet frame.

31. The apparatus according to claim 30, wherein that the to-be-transmitted signal is related to the Ethernet frame comprises at least one of the following: the to-be-transmitted signal is generated based on the Ethernet frame, or the to-be-transmitted system is used to manage transmission of the Ethernet frame.

32. The apparatus according to any one of claims 23 to 31, wherein the management signal comprises a first management data input/output MDIO signal corresponding to a read operation, and the apparatus further comprises:
a receiving module, configured to receive a second MDIO signal, wherein the second MDIO signal is used to perform feedback for the read operation.

33. The apparatus according to claim 32, wherein a second serial channel for receiving the second MDIO signal is different from a first serial channel for sending the multiple code blocks.

34. The apparatus according to any one of claims 23 to 33, wherein if the apparatus is used for a physical layer PHY functional module, the multiple code blocks further comprise a physical layer channel state indication.

35. A signal processing apparatus, comprising:
a receiving module, configured to receive multiple code blocks through one serial channel, wherein the multiple code blocks comprise a first data signal and/or a first control signal, and the multiple code blocks further comprise a management signal; and
an obtaining module, configured to obtain the management signal and the first data signal and/or the first control signal from the multiple code blocks.

36. The apparatus according to claim 35, wherein a first code block of the multiple code blocks comprises a first part and a second part, the first part comprises the first data signal and/or the first control signal, and the second part comprises the management signal; and
the obtaining module is configured to obtain the first data signal and/or the first control signal from the first part of the first code block, and obtain the management signal from the second part of the first code block.

37. The apparatus according to claim 36, wherein there are multiple first code blocks, the second part periodically appears in the multiple first code blocks, and the obtaining module is configured to obtain, from the multiple first code blocks, the second part that periodically appears, and obtain the management signal from the second part.

38. The apparatus according to any one of claims 35 to 37, wherein the multiple code blocks comprise a management code block, the management code block comprises the management signal, and the obtaining module is configured to obtain the management signal from the management code block.

39. The apparatus according to any one of claims 35 to 38, wherein the serial channel is used to connect a media access control MAC layer to a physical layer PHY.

40. The apparatus according to any one of claims 35 to 39, wherein the serial channel is implemented by using one pin or by using a group of pins.

41. The apparatus according to any one of claims 35 to 40, wherein the serial channel is implemented based on a media independent interface MII.

42. The apparatus according to any one of claims 35 to 41, wherein the management signal comprises a first management data input/output MDIO signal corresponding to a read operation, and the apparatus further comprises:
a sending module, configured to send a second MDIO signal, wherein the second MDIO signal is used to perform feedback for the read operation.

43. The apparatus according to claim 42, wherein a second serial channel for sending the second MDIO signal is different from a first serial channel for receiving the multiple code blocks.

44. The apparatus according to any one of claims 35 to 43, wherein if the apparatus is used for a media access control MAC functional module, the multiple code blocks further comprise a physical layer channel state indication, and the obtaining module is further configured to obtain the physical layer channel state indication from the multiple code blocks.

45. A communication apparatus, comprising a media access control MAC layer circuit, wherein the MAC layer circuit is configured to perform the signal processing method according to any one of claims 1 to 11 and claims 13 to 22.

46. A communication apparatus, comprising a physical layer PHY circuit, wherein the PHY circuit is configured to perform the signal processing method according to any one of claims 1 to 21.

47. A chip, comprising a media access control MAC layer circuit, wherein the MAC layer circuit is configured to perform the signal processing method according to any one of claims 1 to 11 and claims 13 to 22.

48. A chip, comprising a physical layer PHY circuit, wherein the PHY circuit is configured to perform the signal processing method according to any one of claims 1 to 21.

49. A signal processing system, comprising a media access control MAC layer circuit and a physical layer PHY circuit, wherein the MAC layer circuit is configured to perform the signal processing method according to any one of claims 1 to 11, and the PHY circuit is configured to perform the signal processing method according to any one of claims 13 to 21; or the PHY circuit is configured to perform the signal processing method according to any one of claims 1 to 12, and the MAC layer circuit is configured to perform the signal processing method according to any one of claims 13 to 22.
